# NEUE EUROPÄISCHE PATENTSCHRIFT

(11) **EP 2 289 652 B2**
(45) Veröffentlichungstag und Bekanntmachung des Hinweises auf die Entscheidung über den Einspruch: **28.09.2022**
(45) Hinweis auf die Patenterteilung: 16.04.2014
(21) Anmeldenummer: 09168566.9
(22) Anmeldetag: 25.08.2009
(51) Int. Cl.: B29C 64/153

(54) **Vorrichtung und Verfahren zur generativen Fertigung**
Device and method for generative production
Dispositif et procédé de fabrication générative

(43) Veröffentlichungstag der Anmeldung: 02.03.2011
(73) Patentinhaber: BEGO Medical GmbH, 28359 Bremen (DE)
(72) Erfinder: Wehning, Ralf, 28879, Grasberg (DE); Vagt, Carsten, 28876, Oyten (DE); Uckelmann, Ingo, 28209, Bremen (DE); Gärtner, Sascha, 28215, Bremen (DE)
(74) Vertreter: Eisenführ Speiser

(56) Entgegenhaltungen:
- DE-A1-102007 047 326
- DE-U- 29 907 262

## Beschreibung

Die Erfindung betrifft ein Verfahren zum Herstellen von Produkten mit individueller Geometrie, insbesondere Zahnersatz oder dentalen Hilfsteilen, mit den Schritten Herstellen mehrerer Produkte auf der Oberfläche einer Substratplatte mittels selektiven Aushärtens, insbesondere mittels selektiven Sinterns oder Schmelzens, bei dem das Material In aufeinanderfolgenden Schichten aufgetragen wird, nach jedem Schichtauftrag ein oder mehrere vorbestimmte Bereiche der aufgetragenen Schicht mittels einer energiereichen Strahlung selektiv ausgehärtet und mit einem oder mehreren Bereichen der darunter liegenden Schicht verbunden werden, wobei die vorbestimmten Bereiche anhand einer Querschnittsgeometrie des Produkts in der jeweiligen Schicht vorbestimmt werden. Ein weiterer Aspekt der Erfindung ist eine Vorrichtung zur Durchführung eines solchen Verfahrens.

Generative Fertigungsverfahren, d.h. Fertigungsverfahren, bei denen ein Material in einem additiven Herstellungsprozess zu einem individuellen Produkt geformt wird, finden ihre Anwendung im Bereich der Herstellung von Prototypen und haben inzwischen auch in der Produktherstellung, insbesondere bei der Anfertigung individuell geformter Produkte oder von Kleinstserien, ihre Anwendung gefunden. Aus EP 1 021 997 ist es beispielsbeispielsweise bekannt, individuell geformten Zahnersatz oder dentale Hilfsteile mittels eines selektiven Lasersinterprozesses unter bestimmten Parametern herzustellen.

Neben einem solchen, für Zahnersatz besonders geeigneten selektivem Lasersinter- oder Laserschmelzverfahren (SLS, SLM) für metallische Pulver, können für andere Produkte auch andere generative Fertigungsverfahren geeignet sein, beispielsweise Verfahren, bei denen ein Granulat oder anderes festes Material durch einen hochenergetischen Strahl, wie beispielsweise einen Laserstrahl oder Elektronenstrahl gesintert oder geschmolzen und auf diese Weise verbunden und ausgehärtet wird, oder Verfahren, bei denen ein in fester oder flüssiger Form vorliegender Kunststoff durch einen hochenergetischen Strahl, wie beispielsweise einen Laser- oder gebündelten Lichtstrahl durch Photopolymerisation selektiv ausgehärtet wird.

Diese generativen Fertigungsverfahren arbeiten regelmäßig solcherart, dass auf einer Substratplatte aufeinanderfolgend Schichten des aushärtbaren Materials aufgetragen werden, beispielsweise indem die Substratplatte sukzessive und diskontinuierlich in ein flüssiges Bad des aushärtbaren Materials abgesenkt wird oder indem mittels einer Pulverauftragsvorrichtung sukzessive Schichten auf der Substratplatte übereinander aufgetragen werden. Nach jedem Schichtauftragsvorgang werden bestimmte Teile der Schicht selektiv ausgehärtet und auf diese Weise das Produkt schichtweise aufgebaut. Nach Fertigstellung des Produkts durch Aushärtung der letzten Schicht können nicht ausgehärtete Bereiche des Materials entfernt und häufig wiederverwendet werden. Das SLS oder SLM-Verfahren ist prinzipiell in EP 0734842 A1 beschrieben, dessen Offenbarung diesbezüglich vollständig einbezogen wird.

Ein grundsätzliches Problem der generativen Fertigungsverfahren ist die lange Zeitdauer, die zwischen der Erstellung der Fertigungsdaten und der Fertigstellung des Produkts vergeht. Es ist bekannt, auf einer Substratplatte mehrere Produkte gleichzeitig generativ aufzubauen, um auf diese Weise die Anzahl der in einer bestimmten Zeitspanne hergestellten Produkte zu erhöhen. Dieses Vorgehen ist insbesondere bei Produkten mit sehr kleinen Abmessungen in Bezug auf die Abmessungen der Substratplatte sinnvoll und führt zu einer wirksamen Steigerung der Produktivität.

Aus EP 0734842 A1 ist es bekannt, die Stillstandszeit einer Fertigungsvorrichtung zu verringern, indem eine auf einem Träger lösbar befestigte Substratplatte verwendet wird und hierdurch unmittelbar nach Fertigstellung der Produkte auf dieser Substratplatte die Substratplatte entnommen und durch eine neue Substratplatte ersetzt werden kann, um einen neuen Herstellungsprozess zu starten. Während diese Ausgestaltung es ermöglicht, dass die Zeitdauer, die benötigt wird, um die Produkte von der Substratplatte zu entfernen, nicht in die Stillstandszeit der Fertigungsvorrichtung einfließt, weist die Vorrichtung nach wie vor den Nachteil auf, dass erst dann, wenn die Fertigungsdaten aller Produkte vorliegen, die auf einer Substratplatte gefertigt werden sollen, der Fertigungsprozess gestartet werden kann und die Gesamtdauer für die Fertigung eines Produkts hierdurch insbesondere bei einer individuellen Fertigung vieler kleiner Produkte nicht entscheidend herabgesetzt werden kann.

Aus WO 2008/128502 ist eine Vorrichtung bekannt, welche dem gleichen Grundgedanken folgt und eine Fördereinrichtung innerhalb der Fertigungsvorrichtung vorsieht, mit der ein oder mehrere Baubehälter sowie Dosier- oder Vorratsbehälter gefördert werden können, um hierdurch ein einfaches, schnelles und sicheres Pulverhandling innerhalb der Fertigungsvorrichtung zu erzielen. Durch diese Vorrichtung kann in schneller Weise eine Fertigung von Produkten in einem Baubehälter mittels eines Pulvermaterials erfolgen und darauf folgend nach der Fertigstellung dieser Produkte in einem zweiten Baubehälter die Fertigung von Produkten mit einem anderen Pulvermaterial erfolgen. Allerdings benötigt auch bei dieser Fertigungsvorrichtung der Fertigungsprozess mindestens so lange, wie zwischen der Erstellung der Fertigungsdaten aller Produkte auf der Substratplatte und der Fertigstellung der Produkte vergeht, so dass die Fertigung in Bezug auf jedes einzelne einer Mehrzahl von Produkten, die aufgebaut werden, nach wie vor einen verhältnismäßig langen Zeitraum in Anspruch nimmt.

Aus WO 2004/014636 ist ein Verfahren zum schichtweisen generativen Herstellen von dreidimensionalen Objekten bekannt, bei dem in zwei Baubereichen mehrere Objekte simultan hergestellt werden. Hierbei wird in einem Baubereich eine Schicht aufgetragen und in einem anderen Baubereich eine selektive Aushärtung mittels einer Strahlung erzielt. Es sind vier Prozesskammern vorgesehen, die in Form von räumlich voneinander getrennten Einzelkammern oder als Teilbereiche von zwei Doppelkammern oder einer Vierfachkammer vorliegen können. Weiterhin ist vorgesehen, dass ein Laser über eine Umschalteinrichtung mit jeweils einer der Prozesskammern verbindbar ist. Die so beschriebene Vorrichtung und das zur generativen Herstellung von Produkten mit dieser Vorrichtung beschriebene Verfahren weist den Nachteil auf, dass zum Zwecke der simultanen Fertigung mit alternierender Aushärtung und Schichtauftrag in den jeweiligen Prozesskammern eine separate Steuerung des Auftragsvorgangs in jeder der Prozesskammern erforderlich ist. Die Vorrichtung und das Verfahren eignet sich zwar für die aufwendige Spezialanwendung einer Fertigung von mehreren Produkten mit unterschiedlichem Ausgangsmaterial in entsprechend unterschiedlichen Prozesskammern, der Fertigungsprozess und die Vorrichtung ist jedoch sowohl im Aufbau als auch in der Steuerung aufwendig und kann daher hinsichtlich seiner Produktivität der Effizienz zur Fertigung zahlreicher kleiner Produkte und der Zeit, die zwischen der Fertigstellung der Fertigungsdaten eines Produkts und der Fertigstellung des Produkte selbst vergeht, weiter optimiert werden.

Aus DE 299 07 262 ist eine Vorrichtung zum Herstellen eines dreidimensionalen Objektes bekannt. Bei dieser Vorrichtung sind auf einem Plattformträger ein oder mehrere Bauplattformen vorgesehen, die als Bauunterlage bzw. Sockel für jeweils ein zu bildendes Objekt dienen. Die Bauplattformen sind mittels Positionierstiften und Spannelementen auf dem Plattformträger befestigt. Der Plattformträger ist auf einer Basisplatte befestigt, die mittels einer Höheneinstellvorrichtung in vertikaler Richtung anhebbar und absenkbar ist.

Während mit den bekannten Fertigungsverfahren und -vorrichtungen nur individuelle Produkte, deren Größe etwa die Substratplatte einnehmen, in einer sowohl produktiven Fertigungsweise als auch mit einer für jedes Einzelprodukt vertretbaren Gesamtfertigungsdauer hergestellt werden können, ist es für Produkte, deren Abmessungen weitaus kleiner sind als die Substratplatte, nur möglich, die Produktivität durch gemeinsame Fertigung mehrerer Produkte auf einer Substratplatte zu sichern, die Fertigungszeit für ein einzelnes Produkt kann jedoch in diesem Fall nicht auf eine wünschenswert kleine Zeitspanne gebracht werden, sondern wird durch die Erstellung von Fertigungsdaten aller auf der Substratplatte herzustellenden Produkte und die hierauf folgende gleichzeitige Fertigung aller Produkte erhöht.

Ein weiteres Problem bei der generativen Fertigung von kleinen Produkten, wobei hierunter Produkte verstanden werden sollen, deren Grundfläche kleiner, insbesondere um mindestens eine Größenordnung kleiner ist als die Oberfläche der Substratplatte, besteht darin, dass in vielen Anwendungsbereichen mit individuellen Produktgeometrien die generative Fertigung als Auftragsfertigung erfolgt, wie beispielsweise bei der Herstellung von Zahnersatz in zahntechnischen Laboren. In diesem Fall kommen die einzelnen Aufträge typischerweise nicht gleichzeitig, sondern zeitversetzt beim Benutzer der Fertigungsvorrichtung an. Um in diesem Fall eine hohe Produktivität und Auslastung der Anlage zu erzielen, muss der Benutzer mehrere Aufträge bündeln, um die in den gebündelten Aufträgen enthaltenen Produkte gleichzeitig auf einer Substratplatte zu fertigen. Dies erzeugt jedoch, insbesondere für den zuerst eingegangenen Auftrag, eine erhebliche Verzögerung zwischen Auftragseingang und Fertigstellung des Produkts. Will der Benutzer hingegen jeden Auftrag in der kürzestmöglichen Zeit bedienen und das entsprechende individuelle Produkt fertigen, so ist er gezwungen, den Fertigungsprozess auf einer Substratplatte mit lediglich einem oder einigen wenigen Produkten durchzuführen, was zu einer insgesamt geringen Auslastung der Fertigungsvorrichtung und niedriger Produktivität führt.

Es ist eine Aufgabe der Erfindung, die bekannten Fertigungsverfahren dahingehend weiterzuentwickeln, dass auch bei Produkten, deren Abmessungen im Verhältnis zur Substratplattenabmessung klein sind, sowohl eine hohe Produktivität als auch eine geringe Fertigungsdauer für jedes einzelne Produkt zu erreichen. Es ist ein weiteres Ziel der Erfindung, ein Fertigungsverfahren und eine Fertigungsvorrichtung bereitzustellen, welche den Zeitraum zwischen Auftragseingang für ein individuell zu fertigendes, kleines Produkt und Fertigstellung des Produkts zu verkürzen, ohne hierbei die Produktivität des Fertigungsverfahrens bzw. der Fertigungsvorrichtung nachteilig zu beeinflussen.

Diese Aufgabe wird erfindungsgemäß gelöst durch ein Verfahren nach Anspruch 1 oder 2.

Das erfindungsgemäße Verfahren zeichnet sich dadurch aus, dass eine Substratplatte bereitgestellt wird, auf welcher ein erstes und ein weiteres Produkt in einem ersten und einem entsprechend weiteren Substratplattensegment gleichzeitig generativ hergestellt werden können und diese Substratplattensegmente lösbar miteinander oder mit einem Grundträger verbunden sind. Hierdurch wird es ermöglicht, ein einzelnes Substratplattensegment nach Fertigstellung des darauf aufgebauten Produkts zu entnehmen, um das Produkt von dem Substratplattensegment ablösen zu können, während ein weiteres Produkt auf einem anderen Substratplattensegment weiterhin generativ hergestellt wird.

Insbesondere können beim erfindungsgemäßen Verfahren die Materialschichten auf die zumindest zwei Substratplattensegmente so aufgetragen werden, dass zumindest eine der Materialschichten sich über beide Substratplattensegmente erstreckt. In diesem Fall kann das Verfahren so ablaufen, dass zunächst jeweils eine Materialschicht auf die zumindest zwei Substratplattensegmente aufgetragen wird und diese Materialschicht im Bereich oberhalb beider Substratplattensegmente selektiv ausgehärtet wird.

Die Substratplattensegmente können insbesondere solcherart mit einer einzigen Beschichtungsvorrichtung zusammenwirken, dass auf einem Substratplattensegment ein Produkt in einem ersten Fertigungsstadium aufgebaut wird, beispielsweise mit einer n-ten Schicht oberhalb der Substratplatte und auf einem anderen Substratplattensegment ein anderes Produkt in einem anderen Fertigungsstadium aufgebaut wird, beispielsweise mit einer m-ten aufgebauten Schicht oberhalb der Substratplatte, wobei m ungleich n ist und die n-te und m-te Schicht in einem Arbeitsgang durch die Beschichtungsvorrichtung aufgetragen werden.

Mit dem erfindungsgemäßen Verfahren können somit mit zeitlich gestaffelten Fertigungsstartzeitpunkten mehrere Produkte auf einer Substratplatte hergestellt werden, wobei die Produkte teilweise gleichzeitig hergestellt werden und auch zeitversetzt von der Substratplatte abgelöst werden. Auf diese Weise wird es möglich, die Substratplatte mit dem Ziel einer hohen Produktivität mit mehreren Produkten auszulasten, gleichzeitig aber zu vermeiden, dass der Fertigungsstartzeitpunkt erst nach Fertigstellung aller Fertigungsdaten für alle auf der Substratplatte herzustellenden Produkte liegen kann. Stattdessen kann der Fertigungsstartzeitpunkt für jedes Substratplattensegment individuell bestimmt werden und entsprechend auch ein individueller Fertigungsendzeitpunkt für jedes Substratplattensegment erzielt werden. Auf diese Weise wird die Dauer der Fertigung eines individuellen Produkts entscheidend herabgesetzt.

Grundsätzlich ist zu verstehen, dass die Substratplatte in zwei, drei oder mehrere Substratplattensegmente unterteilt sein kann. Dabei ist diese Unterteilung insbesondere als tatsächliche physikalische Unterteilung in einzelne Bauelemente zu verstehen, welche zu einer Substratplatte entsprechend zusammengesetzt werden können. Grundsätzlich können auf alle Substratplattensegmente mit einer einzigen, gemeinsamen Schichtauftragsvorrichtung Schichten aufgetragen werden, was aufgrund der damit verbundenen effizienten Fertigung bevorzugt ist. In bestimmten Anwendungen kann es aber vorteilhaft sein, die Substratplattensegmente mittels separater Schichtauftragsvorrichtungen mit Material zu beschichten, wobei auch hier zu verstehen ist, dass beim erfindungsgemäßen Verfahren zwar ein zeitversetzter Fertigungsbeginn und ein entsprechend zeitversetztes Fertigungsende der Produkte auf den verschiedenen Substratplattensegmenten erfolgt, aber auf mehreren Substratplattensegmenten eine simultane Fertigung vorzugsweise mit einem auf allen Substratplattensegmenten simultanen Schichtauftrag und nachfolgender selektiver Aushärtung bestimmter Bereiche zur generativen Herstellung von Produkten zwecks hoher Produktivität stattfindet.

Gemäß einer ersten bevorzugten Ausführungsform ist vorgesehen, dass die Substratplattensegmente so nebeneinander bereitgestellt werden, dass zwischen den Substratplattensegmenten kein Material hindurchtreten kann. Insbesondere kann zu diesem Zweck eine entsprechende Abdichtung zwischen den einzelnen Substratplattensegmenten vorgesehen sein oder die Substratplattensegmente in solcher Weise passend aneinandergefügt sein, dass ein Materialdurchtritt zwischen den Substratplattensegmenten nicht möglich ist.

Noch weiter ist es bevorzugt, dass die Substratplattensegmente als Segmente einer Endlosfördervorrichtung ausgebildet sind. Diese Ausgestaltung ermöglicht in besonders effizienter Weise eine kontinuierliche generative Herstellung von Produkten. Die Substratplattensegmente können beispielsweise an einem Endlosförderband befestigt sein oder solcherart miteinander verbunden sein, dass sie in Gestalt einer Gliederkette ein solches Endlosförderband bilden. In diesem Fall können die Substratplattensegmente in aufeinander folgender Weise entlang eines Obertrums und eines Untertrums bewegt werden, wobei während der Bewegung entlang des Obertrums der Schichtauftrag und die selektive Schichtaushärtung erfolgt. Die Entfernung von nicht ausgehärtetem, aufgetragenem Material aus dem Zwischenraum zwischen den hergestellten Produkten und die Entnahme der Produkte kann ebenfalls im Bereich des Obertrums erfolgen, beispielsweise durch entsprechende Absaugeinrichtungen bzw. mechanische Trennvorrichtungen. Es ist aber in gleicher Weise auch möglich, die Entfernung nicht ausgehärteten Materials im Bereich des Untertrums oder bei Übergang vom Obertrum in den Untertrum erfolgen zu lassen, beispielsweise schwerkraftbedingt und die fertig gestellten Produkte dann entweder mitsamt eines Substratplattensegments oder unmittelbar vom Substratplattensegment im Bereich des Untertrums abzunehmen.

Weiterhin ist es bevorzugt vorgesehen, dass die Substratplattensegmente solcherart ausgebildet und angeordnet werden, dass das erste Produkt oder eine Gruppe von ersten Produkten auf einem einzigen Substratplattensegment aufgebaut wird und das weitere Produkt oder eine Gruppe von weiteren Produkten auf einem oder mehreren weiteren Substratplattensegmenten aufgebaut wird. Bei dieser Ausgestaltung können einerseits ein oder mehrere Produkte auf einem einzigen Substratplattensegment hergestellt werden, um auf diese Weise mit hoher Produktivität kleine Produkte in einer sehr schnellen Fertigungszeit herzustellen. Andererseits ist es auch möglich, ein einziges Produkt auf mehreren Substratplattensegmenten herzustellen. Dies kann insbesondere dann vorteilhaft sein, wenn größere Produkte mit dem erfindungsgemäßen Verfahren hergestellt werden sollen, also solche Produkte, deren Längsstreckung oder Auflagefläche größer als die Oberfläche eines Substratplattensegments ist. Noch weiter ist vorgesehen, dass eine Gruppe von mehreren Produkten auf zwei oder mehr Substratplattensegmenten hergestellt werden kann. Dies kann insbesondere bei Produkten erforderlich sein, die sich in nur einer bestimmten Richtung sehr weit erstrecken. So kann mit dem erfindungsgemäßen Verfahren ein Produkt hergestellt werden, dessen Länge über mehrere Substratbettensegmente reicht. Wenn mehrere solcher Produkte hergestellt werden sollen, so kann gemäß dieser Fortbildungsform eine Gruppe, von solchen Produkten gebildet werden und diese Gruppe über mehrere Substratplattensegmente erstreckt, dann hergestellt werden.

Noch weiter ist es bevorzugt, dass das Material in einem ersten Fertigungsabschnitt in einem quasi-kontinuierlichen Verfahren auf die Substratplatte aufgetragen und selektiv vorbestimmte Bereiche einer jeweils aufgetragenen Schicht ausgehärtet werden und in einem zweiten Fertigungsabschnitt fertig ausgehärtete Produkte quasi-kontinuierlich entnommen werden. Diese Fertigungsweise ermöglicht eine qualitativ hochwertige generative Herstellung in einem ersten Fertigungsabschnitt und zugleich eine diese generative Fertigung nicht negativ beeinflussende Entnahme von fertig gestellten Produkten in einem zweiten Fertigungsabschnitt, der von dem ersten Fertigungsabschnitt beabstandet ist. Dies kann insbesondere erreicht werden, in dem die Substratplattensegmente an einem Endlosförderband an dem angeordnet sind oder ein solches durch die Substratplattensegmente gebildet wird und die Substratplattensegmente entsprechend von dem ersten in den zweiten Fertigungsabschnitt gefördert werden. Insbesondere kann bei dieser Ausgestaltung der erste Fertigungsabschnitt in einer abgeschlossenen kontrollierten, insbesondere, inerten Atmosphäre gehalten werden, um die für eine generative Fertigung nach bestimmten Verfahren erforderlichen Randbedingungen einstellen zu können, wohingegen im zweiten Fertigungsabschnitt die Produkte ausgeschleust werden, bzw. der zweite Fertigungsabschnitt eine Schleuse beinhaltet oder die Produkte bereits beim Übergang vom ersten in den zweiten Fertigungsabschnitt aus der kontrollierten Atmosphäre ausgeschleust werden.

Weiterhin ist bevorzugt vorgesehen, dass in einem ersten Verfahrensschritt eine Materialschicht oberhalb von zumindest zwei, vorzugsweise mehreren Substratplattensegmenten aufgetragen wird, in einem zweiten Verfahrensschritt die Materialschicht selektiv ausgehärtet wird, und dass der maximale Abstand zwischen dem ersten Substratplattensegment und einer zur Herstellung des ersten Produkts darauf aufgetragenen Schicht in zumindest einem, vorzugsweise mehreren, insbesondere allen Verfahrensstadien sich von dem maximalen Abstand zwischen dem weiteren Substratplattensegment und einer zur Herstellung des weiteren Produkts darauf aufgetragenen Schicht unterscheidet. Bei dieser Ausbildungsform ist zu verstehen, dass ein Verfahrensstadium die Sequenz von Schichtauftrag und selektiver Aushärtung umfasst und folglich wiederholt durchgeführt wird, wodurch aufeinanderfolgende Verfahrensstadien entstehen in einem jeweiligen Verfahrensstadium jeweils ein erster und zweiter Verfahrensschritt aufeinanderfolgend ausgeführt wird und hierbei auf jeweils zumindest zwei, insbesondere mehrere oder alle Substratplattensegmente eine Materialschicht in einem Arbeitsgang aufgetragen wird und diese nachfolgend selektiv ausgehärtet wird, um mehrere Produkte auf den entsprechend mehreren Substratplattensegmenten generativ herzustellen. Erfindungsgemäß wird dabei die Schicht auf die Substratplattensegmente solcherart aufgetragen, dass der Abstand zwischen der aufgetragenen Schicht zu den Substratplattensegmenten unterschiedlich für zumindest zwei, insbesondere für jedes Substratplattensegment ist. Dabei ist zu verstehen, dass dieser maximale Abstand während des Schichtauftrags, und auch oder nur während der selektiven Aushärtung unterschiedlich ist. Dieser Abstand kann sich in nur einem von mehreren aufeinanderfolgenden Verfahrensstadien unterscheiden, die jeweils aus der Abfolge eines Schichtauftrags und der selektiven Aushärtung dieser Schicht bestehen, insbesondere aber kann der Abstand in allen Verfahrensstadien sich unterscheiden, d.h. typischerweise, dass die Summe der aufgetragenen Schichten oberhalb eines Substratplattensegments verschieden ist von der Summe der aufgetragenen Schichten oberhalb eines anderen Substratplattensegments, beispielsweise weil mit dem gemeinsamen Auftrag auf die beiden Substratplattensegmente erst zu einem Zeitpunkt begonnen wurde, wo auf einem der beiden Substratplattensegmente bereits eine oder mehrere Schichten aufgetragen waren. Das Verfahren kann beispielsweise auf solche Weise umgesetzt werden, dass die Substratplattensegmente individuell hinsichtlich ihrer Höhe verfahren werden können, um auf diese Weise zu erreichen, dass zwar eine Schicht auf alle Substratplattensegmente in einer gemeinsamen Ebene aufgetragen wird, gleichwohl aber der Abstand dieser Schicht zu den Substratplattensegmenten unterschiedlich für jedes Substratplattensegment ist, oder indem die Schichtauftragsvorrichtung während des Auftragsvorgangs zwischen den Substratplattensegmenten vertikal verstellt wird.

Noch weiter ist es bevorzugt, das Verfahren fortzubilden durch die Schritte Entfernen von auf dem ersten Substratplattensegment angeordnetem Material, welches nicht ausgehärtet wurde, ohne hierbei Material eines weiteren Substratplattensegments zu entfernen, und darauffolgendes Entfernen von dem auf dem weiteren Substratplattensegment angeordnetem Material, welches nicht ausgehärtet wurde. Für die erfindungsgemäße, quasi-kontinuierliche generative Fertigung ist es an der Entnahmestelle besonders vorteilhaft, wenn das Entfernen des nicht ausgehärteten Materials in solcher Weise erfolgen kann, dass ein benachbarter Bereich hierdurch nicht beeinflusst wird und das nicht ausgehärtete Material in diesem benachbarten Bereich stehen bleibt. Während der generativen Fertigung hat das nicht ausgehärtete Material eine Stützfunktion und dient dazu, darüber liegende Schichten aufzunehmen und zu tragen. Das nicht ausgehärtete Material darf daher in der Regel nicht entfernt werden, bevor das Produkt nicht vollständig aufgebaut und ausgehärtet worden ist. Um nun aber unter einer solchen Vorgabe die Notwendigkeit zu verhindern, dass fertig gestellte Produkte zunächst eine längere, der Prozesssicherheit dienende Strecke zurücklegen müssen, bis sie zu der Entnahmestelle gelangen, an dem das nicht ausgehärtete Material entfernt wird, ist es vorteilhaft, wenn die Materialentfernungsvorrichtung die Materialentfernung bewerkstelligen kann, ohne das unmittelbar benachbarte Substratplattensegment hierbei zu beeinflussen. Dies ermöglicht die schnelle und quasi-kontinuierliche Fertigung und vermeidet die Bereitstellung eines Sicherheitsabstandes zwischen Schichtauftragsvorrichtung und Materialentfernungsvorrichtung.

Weiterhin ist es bevorzugt, dass in einer ersten Phase des Herstellungsvorgangs nur Schichtbereiche einer Schicht selektiv ausgehärtet werden, welche zur Herstellung des ersten Produktes dienen und in einer letzten Phase des Herstellungsvorgangs nur Schichtbereiche einer Schicht selektiv ausgehärtet werden, welche zur Herstellung des weiteren Produktes dienen und vorzugsweise in einer zwischen der ersten und der letzten Phase liegenden mittleren Phase des Herstellungsvorgangs Schichtbereiche einer Schicht ausgehärtet werden, welche zur Herstellung des ersten und des weiteren Produktes dienen. Mit der so erreichten, quasi-kontinuierlichen und simultanen Fertigung von Produkten in unterschiedlichen Fertigstellungsstadien wird ein produktives und schnelles Verfahren zur individuellen Herstellung von kleinen Produkten mittels eines generativen Fertigungsverfahrens erzielt.

Gemäß einer weiteren bevorzugten Ausführungsform ist vorgesehen, dass zwischen den Substratplattensegmenten eine Trennwand bereitgestellt wird, welche den oberhalb jedes Substratplattensegments bestehenden Bauraum von dem oberhalb eines benachbarten Substratplattensegments bestehenden Bauraum abtrennt. Eine solche Trennwand ermöglicht oder vereinfacht die Entfernung von nicht ausgehärtetem Material oberhalb von einem Substratplattensegment, ohne hierbei das nicht ausgehärtete Material in einem hierzu benachbarten Substratplattensegment zu beeinflussen. Dabei ist zu verstehen, dass eine solche Trennwand als Bestandteil der Fertigungsvorrichtung bereitgestellt werden kann und in diesem Fall beispielsweise so ausgeführt werden kann, dass sie simultan zum Schichtauftrag nachgeführt wird, um jeweils eine exakte Höhe oder etwas weniger als diese exakte Höhe aufzuweisen, die der oberen Schichtfläche des Materialauftrags im Bereich zwischen zwei Substratplattensegmenten entspricht.

Dabei kann insbesondere vorgesehen sein, dass die Trennwand durch Aushärten des aufgetragenen Materials während des Herstellungsvorgangs des Produkts hergestellt wird. Mit dieser Fortbildungsform wird jeweils am Rand eines Substratplattensegments während des Fertigungsvorgangs aus dem aufgetragenen Material eine solche Trennwand hergestellt. Diese Vorgehensweise hat den Vorteil, dass auf konstruktiv aufwändige Trennwandnachführungen verzichtet werden kann. Stattdessen wird entlang des Randbereichs eines Substratplattensegments eine entsprechende Trennwand aufgebaut, die entsprechend bei jedem Schichtauftrag höher wächst und auf diese Weise zur Gesamthöhe des Materialschichtbettes nachgeführt wird. Die Trennwand kann dann bei Entfernen der Produkte von dem Substratplattensegment oder im Zuge der Entfernung von nicht ausgehärtetem Material von dem benachbarten Substratplattensegment entfernt werden.

Die beiden vorgenannten Ausführungsformen können weiter fortgebildet werden, indem die Trennwand zwischen zwei Substratplattensegmenten mit zumindest einem der beiden Substratplattensegmenten verbunden ist. Durch Verbindung der Trennwand mit beiden Substratplattensegmenten, welche sie voneinander abtrennt, kann zugleich auch eine sichere Abdichtung gegen Materialdurchtritt zwischen den Substratplattensegmenten erreicht werden. Die Verbindung kann hierbei durch generativen Aufbau der Trennwand auf einem oder beiden Substratplattensegmenten oder durch entsprechend konstruktive Verbindung eines zur Vorrichtung gehörenden Trennwandbauteils erzielt werden. Gemäß einer weiteren bevorzugten Ausführungsform ist vorgesehen, dass jedes Substratplattensegment individuell in Bezug auf die Schichtauftragsvorrichtung solcherart verfahren wird, dass der Abstand senkrecht zur Oberfläche der Substratplatte und der mit einer Schichtauftragsvorrichtung aufgetragenen Schicht verändert wird und die resultierende Höhe des Materialbetts auf einem Substratplattensegment verschieden von der Höhe des Materialbetts auf einem anderen Substratplattensegment ist. Gemäß dieser Ausführungsform kann jedes Substratplattensegment beispielsweise mittels eines Aktuators, der wechselweise auf die Substratplattensegmente einwirkt oder mittels mehrerer Aktuatoren, von denen jeder für jeweils ein Substratplattensegment bereitgestellt ist, individuell in seiner Höhe verfahren werden. Hierdurch wird erreicht, dass die Substratplattensegmente auf unterschiedlichen Höhen platziert werden können, um dann nachfolgend eine Materialschicht in eine Ebene oberhalb der Substratplattensegmente aufzutragen. Diese Materialschicht liegt dann in individuell verschiedenem Abstand zu den jeweiligen Substratplattensegmenten, d.h. insbesondere in individuellem Abstand zu der Ebene der Oberfläche der Substratplattensegmente, auf welche die erste Materialschicht auf das jeweilige Substratplattensegment aufgetragen worden ist. Die Ausführungsform eignet sich, um ein Produkt in einem ersten Verfahrensstadium auf einem ersten Substratplattensegment und ein anderes Produkt in einem anderen Fertigungsstadium auf einem anderen Substratplattensegment bei gemeinsamem Schichtauftrag auf die beiden Substratplattensegmente generativ herzustellen und kann auf entsprechend mehrere Substratplattensegmente mit entsprechend mehreren Produkten in unterschiedlichen Verfahrensstadien angewendet werden.

Weiter ist es bevorzugt, dass vor jedem Materialauftrag die ausgehärteten Bereiche der zuvor aufgetragenen Schicht oberflächlich beschliffen werden. Durch eine solche Oberflächenbearbeitung, die insbesondere als Beschleifung, aber auch durch andere spanende Fertigungsverfahren mit geometrisch definierter oder geometrisch undefinierter Schneide erfolgen kann, wird die geometrische Präzision des generativen Fertigungsverfahrens weiter erhöht. Insbesondere wird durch eine solche spanende Bearbeitung eine definierte Auflagefläche und Verbindungsstelle für die darüber liegende Schicht und die darin auszuhärtenden Bereiche bereitgestellt. Zudem wird durch die spanende Bearbeitung eine definierte Schichtdicke eingestellt, was für ein reproduzierbares geometrisches Fertigungsergebnis vorteilhaft ist.

Noch weiter ist es bevorzugt, dass zur Aushärtung des ersten und des zumindest einen weiteren Produkts, insbesondere aller weiteren Produkte eine einzige Strahlungsquelle, insbesondere ein einziger Strahlengang einer einzigen Strahlungsquelle genutzt wird. Grundsätzlich ist zu verstehen, dass zur Beschleunigung des Fertigungsvorgangs auch auf mehrere Strahlenquellen oder mehrere Strahlengänge einer einzigen Strahlenquelle zurückgegriffen werden kann. Das erfindungsgemäße Herstellungsverfahren zeichnet sich aber insbesondere dadurch aus, dass es zwar mehrere Produkte gleichzeitig herstellt und diese Produkte in unterschiedlichen Fertigungsstadien sind, d.h. insbesondere aus einer unterschiedlichen Anzahl von Schichten aufgebaut sind. Besonders ist hierbei aber, dass sowohl der Auftrag einer Schicht durch eine einzige Schichtauftragsvorrichtung für alle Substratplattensegmente und darauf aufgebauten, zu fertigenden Produkte erfolgen kann und dass darüber hinaus auch die Aushärtung der bestimmten Bereiche einer Schicht für alle zu fertigenden Produkte durch eine einzige Strahlungsquelle erfolgen kann.

Gemäß einer weiteren bevorzugten Ausführungsform ist vorgesehen, dass jedes Substratplattensegment während des Herstellungsvorgangs mittels einer Hubvorrichtung in einer vertikalen Richtung angehoben und abgesenkt wird und die Hebe- und Senkbewegung der Substratplattensegmente unabhängig voneinander ist. Die unabhängige Hebe- und Senkbewegung kann insbesondere durch jeweils einen auf mehrere Substratplattensegmente einwirkenden Aktuator bewirkt werden oder durch jeweils einen Aktuator, der jeweils einem Substratplattensegment zugeordnet ist.

Noch weiter ist es bevorzugt, dass mehrere Substratplattensegmente in einem Arbeitsgang mit einer einzigen Materialauftragsvorrichtung mit Material beschichtet werden. Diese Fortbildung ermöglicht eine effizient arbeitende Schichtauftragsvorrichtung bei zugleich individuellem Fertigungsfortschritt der jeweiligen Produkte, die auf den jeweils mehreren Substratplattensegmenten hergestellt werden.

Schließlich kann das Verfahren durch die Schritte fortgebildet werden: Aufbringen einer n-ten Materialschicht auf eine Substratträgerplatte, selektives Aushärten von Teilen der Materialschicht mittels Einwirken einer energiereichen Strahlung, insbesondere einer Laserstrahlung, auf diese Teile der Materialschicht, Führen der energiereichen Strahlung über die n-te Materialschicht nach Führungsdaten, welche aus den geometrischen Daten einer x-ten Querschnittsfläche eines ersten Produkts ermittelt wurden, Aufbringen einer n+1-ten Materialschicht auf die n-te Materialschicht, Führen der energiereichen Strahlung über die n+1-te Materialschicht nach Führungsdaten, welche aus den geometrischen Daten einer x+1-ten Querschnittsfläche des ersten Produkts ermittelt wurden, Führen der energiereichen Strahlung über die n-te Materialschicht nach Führungsdaten, welche aus den geometrischen Daten einer y-ten Querschnittsfläche eines zweiten Produkts ermittelt wurden, und Führen der energiereichen Strahlung über die n+1-te Materialschicht nach Führungsdaten, welche aus den geometrischen Daten einer y+1-ten Querschnittsfläche des zweiten Produkts ermittelt wurden wobei, x ungleich y ist. Bei dieser Fortbildungsform werden zumindest zwei Produkte hergestellt, indem sie in einem gemeinsamen Schichtauftrag in zwei unterschiedlichen Schichtbereichen ein und derselben Schicht einer selektiven Aushärtung unterzogen werden, wobei in dieser Schicht in den Produkten selbst unterschiedliche Höhen gegenüber der Substratplatte dargestellt sind.

Ein weiterer Aspekt der Erfindung ist eine Vorrichtung nach Anspruch 11 oder 12.

Die erfindungsgemäße Vorrichtung zeichnet sich dadurch aus, dass oberhalb einer Substratplatte eine Materialauftragsvorrichtung angeordnet ist, mit der in einem Arbeitsgang eine Materialschicht auf alle Substratplattensegmente der Substratplatte aufgetragen werden kann. Weiterhin ist eine Strahlungsquelle oberhalb der Substratplatte bereitgestellt. Materialauftragsvorrichtung und Strahlungsquelle werden mittels einer Fertigungssteuerungseinrichtung so angesteuert, dass die im ersten Arbeitsgang aufgetragene Materialschicht in einem weiteren Arbeitsgang mit der Strahlungsquelle selektiv ausgehärtet werden kann, in mehrere Segmente unterteilt ist. Die Segmente können lösbar miteinander verbunden sein, worunter zu verstehen ist, dass jeweils ein Segment mit nur einem benachbarten Segment verbunden ist oder ein Segment mit mehreren umgebenden Segmenten verbunden sein kann. Alternativ ist auch vorgesehen, dass die Segmente nebeneinander angeordnet sind und jedes Segment lösbar mit einem Grundträger verbunden ist. Mit der erfindungsgemäßen Vorrichtung wird es auf diese Weise möglich, mehrere Produkte verteilt auf mehrere Substratplattensegmente generativ zu fertigen und hierbei die Substratplattensegmente solcherart in ihrer Höhe relativ zueinander zu bewegen, dass die Produkte in unterschiedlichen Fertigungsstadien auf den unterschiedlichen Substratplattensegmenten hergestellt werden und das oder die Produkte, die auf einem ersten Substratplattensegment hergestellt worden sind, mit dem Substratplattensegment zu entnehmen und hiervon abzulösen, bevor ein oder mehrere Produkte von einem anderen Substratplattensegment entnommen und abgelöst werden.

Die erfindungsgemäße Vorrichtung kann fortgebildet werden, indem die Materialauftragsvorrichtung zum simultanen Auftragen einer Materialschicht oberhalb einer Anzahl der mehreren Substratplattensegmente in einem Arbeitsgang ausgebildet ist.

Weiterhin kann die erfindungsgemäße Vorrichtung fortgebildet werden, indem die Substratplattensegmente und die Materialzufuhreinrichtung mittels eines oder mehrerer Aktuatoren solcherart relativ individuell zueinander bewegbar sind, dass der Abstand zwischen der Ebene der Oberfläche eines ersten Substratplattensegments und eines zur Herstellung eines ersten Produkts darauf aufgetragenen Schichtbereichs der Materialschicht sich von dem Abstand zwischen der Ebene der Oberfläche eines weiteren Substratplattensegments und eines zur Herstellung des weiteren Produkts darauf aufgetragenen Schichtbereichs der selben Materialschicht unterscheidet.

Noch weiter kann die erfindungsgemäße Vorrichtung fortgebildet werden durch eine Materialentfernungsvorrichtung, insbesondere eine Material-Absaugeinrichtung, wobei die Materialentfernungsvorrichtung ausgebildet ist, um nicht ausgehärtetes Material aus einem ein gefertigtes Produkt umgebenden Bereich zu entfernen, und so angeordnet ist, dass sie das Material auf einem ersten Substratplattensegment entfernen kann und hierbei das Material auf einem weiteren, hierzu benachbarten Substratplattensegment belassen kann.

Gemäß einer weiteren bevorzugten Ausführungsform ist vorgesehen, dass die erfindungsgemäße Vorrichtung eine Steuerung aufweist zur Ansteuerung der Führungsvorrichtung des hochenergetischen Strahls, welche ausgebildet ist, um die Führungsvorrichtung so anzusteuern, dass in einer ersten Phase des Herstellungsvorgangs nur Schichtbereiche einer Schicht selektiv ausgehärtet werden, welche zur Herstellung eines ersten Produktes auf einem ersten Substratplattensegment dienen, in einer letzten Phase des Herstellungsvorgangs nur Schichtbereiche einer Schicht selektiv ausgehärtet werden, welche zur Herstellung eines weiteren Produktes auf einem weiteren Substratplattensegment dienen und in einer zwischen der ersten und der letzten Phase liegenden mittleren Phase des Herstellungsvorgangs Schichtbereiche einer Schicht ausgehärtet werden, welche zur Herstellung des ersten und des weiteren Produktes dienen.

Die erfindungsgemäße Vorrichtung kann weiter fortgebildet werden durch eine Steuerung zur Ansteuerung der Materialauftragsvorrichtung und/oder zur Ansteuerung von zumindest einem Aktuator zur relativen Bewegung zwischen den Substratplattensegmenten und der Materialauftragsvorrichtung, die ausgebildet ist, um die sich nach Auftrag aller Materialschichten einstellende Höhe des Materialbetts auf einem ersten Substratplattensegment verschieden von der nach Auftrag aller Materialschichten resultierende Höhe des Materialbetts auf einem anderen Substratplattensegment bereitzustellen. Hiermit können auf verschiedenen Substratplattensegmenten Produkte unterschiedlicher Bauhöhe hergestellt und diese gleichzeitig fertiggestellt werden.

Weiterhin ist bevorzugt vorgesehen, dass an der Materialauftragsvorrichtung eine Bearbeitungsvorrichtung zum Abtragen eines Oberflächenanteils der ausgehärteten Materialbereiche, vorzugsweise zum oberflächlichen Beschleifen, der ausgehärteten Materialbereiche einer zuvor aufgetragenen Materialschicht angeordnet ist.

Noch weiter ist bevorzugt vorgesehen, dass die Substratplattensegmente an einem Endlos-Förderband angeordnet sind, welches teilweise oder vollständig in einer Bearbeitungskammer verläuft, die gegen die Umgebung soweit abgedichtet ist, dass darin eine kontrollierte, insbesondere inerte Atmosphäre eingestellt werden kann.

Weiter fortgebildet werden kann die Vorrichtung durch zumindest eine Hubeinrichtung, welche mit jedem Substratplattensegment gekoppelt ist oder gekoppelt werden kann, um während des Herstellungsvorgang das jeweilige Substratplattensegment unabhängig von den anderen Substratplattensegmente in einer vertikalen Richtung anzuheben und abzusenken.

Noch weiter kann die erfindungsgemäße Vorrichtung fortgebildet werden durch eine einzige Strahlungsquelle, die, insbesondere mittels eines einzigen Strahlengangs, zur Aushärtung der auf allen Substratplattensegmenten hergestellten Produkte genutzt wird.

Noch weiter kann die erfindungsgemäße Vorrichtung fortgebildet werden durch eine zwischen den Substratplattensegmenten angeordnete Trennwand, welche den oberhalb jedes Substratplattensegments bestehenden Bauraum von dem oberhalb eines benachbarten Substratplattensegments bestehenden Bauraum abtrennt.

Es ist bevorzugt weiter vorgesehen, dass die Trennwand zwischen zwei Substratplattensegmenten mit zumindest einem der beiden Substratplattensegmenten verbunden oder gegen dieses Substratplattensegment solcherart abgedichtet ist, dass kein Material zwischen Trennwand und Substratplattensegment hindurchtreten kann.

Gemäß einer weiteren bevorzugten Ausführungsform zeichnet sich die Vorrichtung aus durch eine Steuerung zur Ansteuerung der Führungsvorrichtung des hochenergetischen Strahls, welche ausgebildet ist, um die Führungsvorrichtung so anzusteuern, dass die Trennwand während des Herstellungsvorgangs des Produkts durch Aushärten des aufgetragenen Materials hergestellt wird.

Schließlich kann die erfindungsgemäße Vorrichtung fortgebildet werden durch eine Steuerung zur Ansteuerung der Führungsvorrichtung des hochenergetischen Strahls, welche ausgebildet ist, um die energiereiche Strahlung über die n-te Materialschicht nach Führungsdaten zu führen, welche aus den geometrischen Daten einer x-ten Querschnittsfläche eines ersten Produkts ermittelt wurden, um Teile der n-ten Materialschicht mittels Einwirken einer energiereichen Strahlung auszuhärten, die energiereiche Strahlung über eine n+1-te Materialschicht nach Führungsdaten zu führen, welche aus den geometrischen Daten einer x+1-ten Querschnittsfläche des ersten Produkts ermittelt wurden, um Teile der n+1-ten Materialschicht mittels Einwirken der energiereichen Strahlung auszuhärten, die energiereiche Strahlung über die n-te Materialschicht nach Führungsdaten zu führen, welche aus den geometrischen Daten einer y-ten Querschnittsfläche eines zweiten Produkts ermittelt wurden, um Teile der n-ten Materialschicht mittels Einwirken der energiereichen Strahlung auszuhärten und die energiereiche Strahlung über die n+1-te Materialschicht nach Führungsdaten zu führen, welche aus den geometrischen Daten einer y+1-ten Querschnittsfläche des zweiten Produkts ermittelt wurden, um Teile der n+1-ten Materialschicht mittels Einwirken der energiereichen Strahlung auszuhärten, wobei x ungleich y ist.

Bevorzugte Ausführungsformen der Erfindung werden anhand der beiliegenden Figuren beschrieben. Es zeigen:
Fig. 1A eine schematische, längsgeschnittene Seitenansicht einer ersten Ausführungsform der Erfindung,
Fig. 1B eine Draufsicht auf die Ausführungsform gemäß Fig. 1A,
Fig. 2 eine schematische, längsgeschnittene Seitenansicht einer zweiten Ausführungsform der Erfindung,
Fig. 3 eine schematische, längsgeschnittene Seitenansicht einer dritten Ausführungsform der Erfindung,
Fig. 4 eine schematische, längsgeschnittene Seitenansicht einer vierten Ausführungsform der Erfindung,
Fig. 5 eine schematische Ansicht einer Fertigungsanordnung gemäß einer fünften Ausführungsform der Erfindung, und.
Fig. 6 eine schematische Ansicht einer Fertigungsanordnung gemäß einer sechsten Ausführungsform der Erfindung,
Fig. 7 eine schematische Ansicht einer Fertigungsanordnung gemäß einer siebten Ausführungsform der Erfindung,
Fig. 8 eine achte Ausführungsform der Erfindung.

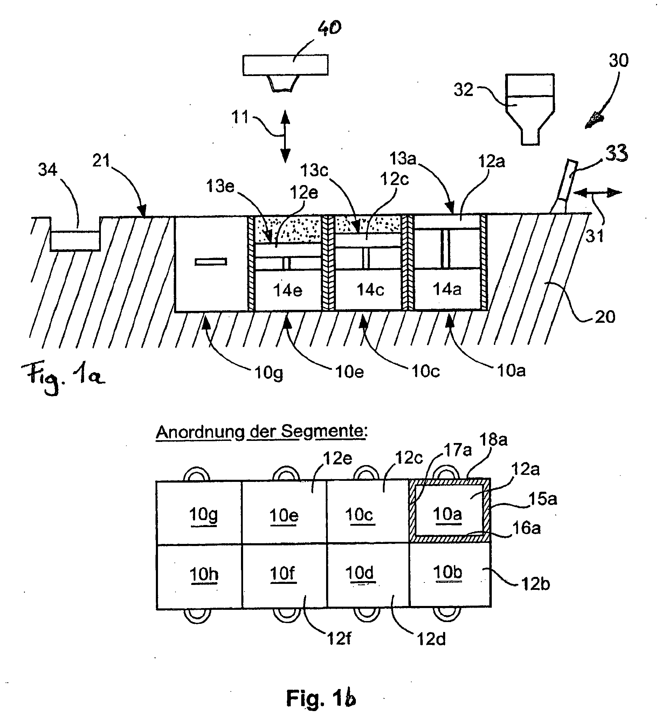

Fig. 1A zeigt eine Aufnahmevorrichtung 20 für insgesamt acht Einschübe 10a-h, die in zwei Reihen und vier Spalten angeordnet sind, wie aus Fig. 1B zu erkennen ist. Jeder Einschub 10a-h weist ein individuell höhenverstellbares Substratplattensegment 12a-f auf. Jedes Substratplattensegment 12a-f ist innerhalb seines Einschubs 10a-f in einer vertikalen Richtung 11 individuell höhenverstellbar. Die vertikale Richtung 11 liegt hierbei für jedes der Substratplattensegmente 12a-f parallel zueinander und senkrecht zur oberen Oberfläche 13a-f der Substratplattensegmente 12a-f, die horizontal, d.h. senkrecht zur Schwerkraftrichtung ausgerichtet ist.

Die Auswertungen innerhalb der Aufnahmevorrichtung 20 sind ausgebildet, um jeweils einen Einschub 10a-f aufzunehmen, in dem ein Substratplattensegment 12a-f angeordnet ist. Es ist aber zu verstehen, dass auch Substratplattensegmente in die Aufnahmevorrichtung 20 eingesetzt werden können, welche eine größere Grundfläche der Substratplatte 12a aufweisen, beispielsweise eine Grundfläche, die doppelt so groß oder viermal so groß ist wie die in Fig. 1a, b dargestellten Substratplattensegmente und die entsprechend zwei bzw. vier Einschubplätze einnehmen.

In den Einschüben 10g und 10h ist ein Füllblock 12g, 12h eingesetzt, der kein Substratplattensegment darstellt und nicht zur Fertigung von Produkten dient.

Jedes Substratplattensegment 12a-f ist mittels jeweils eines Aktuators 14a-f, der beispielsweise ein elektromotorisch betriebener Linearaktuator sein kann, höhenverstellbar. Der Aktuator 14a-f ist Bestandteil des Einschubes 10a-f.

Jeder Einschub 10a-f ist von einem nach oben offenen, im Querschnitt rechteckigen, insbesondere quadratischen Gehäuse umgeben, welches vier Wände umfasst, wie beispielhaft am Einschub 10a durch die Wände 15a - 18a abgebildet. Innerhalb dieser Wände bewegt sich das Substratplattensegment 12a und dichtet hierbei an seinem seitlichen Randbereich mit den Wänden solcherart ab, dass Beschichtungsmaterial, welches auf das Substratplattensegment aufgetragen ist, nicht zwischen Substratplattensegment und den Wänden hindurchtreten kann.

Die oberen Endkanten der Wände schließen bündig mit einer Oberfläche 21 der Aufnahmevorrichtung 20 ab, wenn die Einschübe 10a-e in die Aufnahmevorrichtung eingesetzt sind. In gleicher Weise steht eine obere Oberfläche der Einschübe 10g, h fluchtend zu der Oberfläche 21 der Aufnahmevorrichtung 20.

Eine Pulverauftragsvorrichtung 30 ist bereitgestellt, welche einen Pulverförderer 32 umfasst, aus dem Pulver auf die Oberfläche 21 der Aufnahmevorrichtung abgegeben werden kann, und die weiterhin einen Schieber 33 umfasst, der sich entlang einer Bewegungsrichtung 31 reziprokal über die Oberfläche 21 und die Substratplattensegmente 12a-f bzw. Einschübe 10a-h bewegen kann. Der Schieber 33 verteilt hierbei das von dem Pulverförderer 32 abgegebene Pulver und trägt eine Pulverschicht oberhalb der Substratplattensegmente 12a-f auf.

Die Pulverauftragsvorrichtung umfasst weiterhin eine Sammelvorrichtung 34 für überschüssiges Pulver. In die Sammelvorrichtung 34 schiebt der Schieber 33 dasjenige Pulver, welches nicht als Pulverschicht oberhalb der Substratplattensegmente aufgetragen werden konnte.

Wie in Fig. 1A zu erkennen ist, sind die Substratplattensegmente 12a-f mittels ihrer Aktuatoren 14a-f auf unterschiedliche Höhen eingestellt, d.h. der Abstand der oberen Oberfläche 13a-f jedes Substratplattensegments zu der Ebene der Oberfläche 21, entlang welcher sich der Schieber 33 bewegt und als Rakel das Pulver aufträgt, ist unterschiedlich.

Nach jedem Pulverauftragsvorgang, der durch Bewegen des Schiebers 33 aus der in Fig. 1A dargestellten rechten Position in eine von hier aus gesehen linke Position im Bereich der Auffangwanne 34 erfolgt, wird die bei diesem Pulverauftragsvorgang aufgetragenen Schicht oberhalb jedes Substratplattensegments 12a-f mittels einer Strahlungsquelle, hier einem Hochleistungslaser 40 in vorbestimmten Bereichen ausgehärtet. Diese selektive Aushärtung erfolgt anhand von Steuerungsdaten, die den Querschnitt eines Produkts in der jeweils aufgetragenen Schicht entsprechen. Bei diesem selektiven Aushärtungsvorgang werden die ausgehärteten Bereiche zugleich mit entsprechend darunter liegenden Bereichen des Produkts, die zuvor ausgehärtet wurden, verbunden. Der Aushärtungsvorgang kann insbesondere als selektives Lasersintern oder selektives Laserschmelzen erfolgen. Grundsätzlich sind aber auch andere Aushärtungsprinzipien, wie beispielsweise Photopolymerisation, auf das Prinzip der Erfindung anwendbar. Der Strahl des Hochleistungslasers 40 wird hierbei mit Strahllenkungsmitteln solcherart gelenkt, dass er auf die vorbestimmten Bereiche der jeweils zuvor aufgetragenen Schicht trifft und diese Bereiche oberhalb allen zuvor beschichteten Substratplattensegmenten selektiv aushärtet.

Die Strahllenkungsmittel sind hierzu mit einer Steuerungsvorrichtung signaltechnisch gekoppelt. In der Steuerungsvorrichtung sind Fertigungsdaten für zumindest die jeweils gleichzeitig herzustellenden Produkte gespeichert. Die Fertigungsdaten umfassen insbesondere Lagedaten, welche die Lage eines jeweiligen Produkts auf der Substratplatte charakterisieren und Geometriedaten, welche die Geometrie des jeweiligen Produkts charakterisieren. Die Geometriedaten sind solcherart aufbereitet, dass darin die geometrischen Daten einzelner Querschnitte des Produkts enthalten sind. Die jeweilige Lage eines solchen Querschnitts und die für diesen Querschnitt gespeicherten Geometriedaten entspricht der Lage der jeweils aufgetragenen Materialschicht, aus dem dieser Produktquerschnitt hergestellt wird und der Geometrie des Produkts in dieser Materialschicht. In der dargestellten Ausführungsform mit senkrecht auf der Platte aufstehenden Produkten entsprechen die geometrischen Daten daher horizontal verlaufenden Querschnittsebenen durch dieses Produkt.

Nach der Aushärtung der selektierten Bereiche fährt der Schieber 33 aus der linken Position in die in Fig. 1A dargestellte rechte Position zurück. Hierbei werden die selektiv ausgehärteten Bereiche mittels einer Schleifvorrichtung, die am Schieber angeordnet ist, oberflächlich beschliffen, um hierdurch eine definierte Oberfläche für den nachfolgenden Beschichtungs- und Aushärtungsvorgang und eine höhere geometrische Präzision des generativ hergestellten Bauteils zu erzielen.

Nach diesem Vorgang werden die Substratplattensegmente 12a-f um eine vordefinierte Distanz abgesenkt, welche der Schichtstärke der nachfolgend aufgetragenen Schicht entspricht. Durch diesen Absenkungsvorgang liegt die Oberfläche der zuvor aufgetragenen Schicht und der darin selektiv ausgehärteten Bereiche nicht mehr in Flucht mit der Oberfläche 21, entlang welcher sich der Schieber 33 mit einer unteren Rakelkante bewegt, sondern um die Distanz, um welche das Substratplattensegment abgesenkt wurde, unterhalb der Ebene dieser Oberfläche 21. Hierauf folgend wird wiederum eine dosierte Menge Pulver aus dem Pulverförderer 32 auf die Oberfläche 21 abgegeben und durch Bewegen des Schiebers 33 nach links dieses Pulver als Schicht oberhalb jedes abgesenkten Substratplattensegments aufgetragen.

Der Vorgang wird wiederholt, bis innerhalb des solcherart schichtweise aufgetragenen Pulverbettes oberhalb eines Substratplattensegments ein Produkt fertig gestellt ist. Dabei ist, wie aus Fig. 1A zu erkennen ist, der Zeitpunkt der Fertigstellung eines oder mehrerer Produkte oberhalb eines Substratplattensegments in den verschiedenen Einschüben 10a-f unterschiedlich, im dargestellten Beispiel wird das oder die Produkte auf dem Substratplattensegment 12e im Einschub 10e typischerweise vor dem oder den Produkten auf dem Substratplattensegment 12c im Einschub 10c fertig gestellt werden, sofern die darin gefertigten Produkte etwa die gleiche Höhe aufweisen. Der Einschub 10a ist in der maximal angehobenen Position des Substratplattensegments 12a gezeigt, welche dem Fertigungsbeginn entspricht.

Nach Fertigstellung der Produkte auf einem einzelnen Einschub 10a-f kann dieser Einschub aus der Aufnahmevorrichtung 20 entnommen werden und durch einen neuen Einschub ersetzt werden, dessen Substratplatte in der obersten Position ist. Die Produkte im entnommenen Einschub können von der Substratplatte abgelöst werden, nachdem nicht ausgehärtetes Pulvermaterial entfernt worden ist. Auf dem neu eingesetzten Segment können simultan neue Produkte hergestellt werden. Durch den solcherart möglichen, zeitversetzten aber zugleich simultanen Aufbau von Produkten in der Vorrichtung wird eine hohe Produktivität bei der generativen Fertigung von Produkten erzielt.

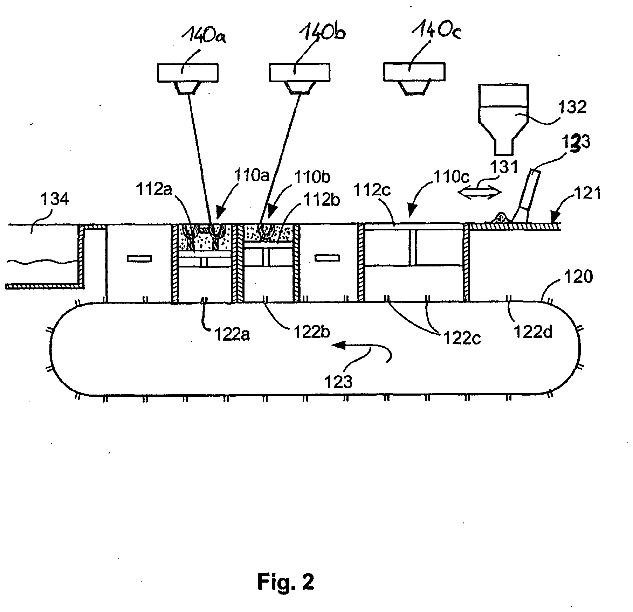

Fig. 2 zeigt eine zweite Ausführungsform der Erfindung, bei der mehrere Substratplattensegmente 112a-c als Module 110a-c auf einem Endlosförderband 120 angekoppelt werden können. An dem Förderband 120 sind mehrere Ankopplungspunkte 122a, b, c, d ... bereitgestellt, welche zugleich als Arretierung für ein Modul 110a-c dienen und die Stromversorgung für einen in dem Modul angeordneten Aktuator 114a-c bereitstellen.

Der Aktuator innerhalb jedes Moduls ist ausgebildet, um die Substratplattensegmente 112a-c jeweils individuell höhenzuverstellen.

Wie in Fig. 2 zu erkennen ist, sind die Substratplattensegmente 112a und 112b als Einzelsegmente ausgeführt, wohingegen das Substratplattensegment 112c als Doppelsegment ausgeführt ist und sich über die doppelte Länge entlang des Förderbandes 120 erstreckt.

Jedes Modul 110a-c ist wiederum, wie die Einschübe gemäß Fig. 1A, B, mit Seitenwänden versehen, innerhalb welcher sich die Substratplattensegmente 112a-c in randseitig abgedichteter Weise vertikal bewegen können. Die randseitigen Wände schließen mit ihren oberen Kanten fluchtend mit einer Oberfläche 121 ab, auf welche wiederum aus einem Pulverförderer 132 Pulver abgegeben werden kann. Die Oberfläche 121 liegt horizontal, d.h. senkrecht zur Schwerkraftrichtung und durch Bewegen eines Schiebers 133 mit einer unteren Rakelkante, welche auf der Oberfläche 121 aufliegt, in einer Richtung 131 wird das aufgetragene Pulver über die Substratplattensegmente 112a-c verteilt und schließlich nach Verfahren des Schiebers aus der in Fig. 2 dargestellten rechten Position in eine hierzu horizontal nach links versetzte linke Position überschüssiges Pulver in einen Auffangbehälter 134 geschoben.

Wiederum wird auch bei der in Fig. 2 dargestellten Ausführungsform durch stufenweises Absenken der Substratplattensegmente 112a-c in jeweils individueller Weise ein unterschiedlich hohes Pulverbett in jedem einzelnen Modul 110a-c eingestellt und hierdurch ein unterschiedlicher Fertigungsfortschritt erreicht, d.h. die in einem Arbeitsgang des Schiebers 133 aufgetragene Schicht weist einen Abstand zu der oberen Oberfläche des Substratplattensegments 112c auf, der unterschiedlich ist zu dem Abstand zur Oberfläche des Substratplattensegments 112b, der wiederum unterschiedlich ist zu der Oberfläche des Substratplattensegments 112a. Auf diese Weise können in den einzelnen Modulen Produkte mit unterschiedlichem Fertigungsfortschritt bzw. in unterschiedlichen Fertigungsstadien generativ erzeugt werden, wie zu ersehen ist aus dem im Modul 110a kurz vor Fertigstellung befindlichen Produkt 160, 161a und dem im Modul 110b etwa zur Hälfte fertig gestellten Produkt 160b.

Für die Funktion der Fertigungsanordnung gemäß Fig. 2 ist es vorgesehen, dass der Fertigungsfortschritt in den Modulen 110a-c ausgehend von rechts in Förderrichtung des Förderbandes 120 nach links, wie dargestellt durch den Pfeil 123, zunimmt. Sobald in einem Fertigungsmodul eine Fertigstellung der Produkte erzielt wurde, wird das Förderband so weit fortbewegt, dass dieses Modul entnommen werden kann oder das Modul wird entnommen und das Förderband um die entsprechende Länge des Moduls fortbewegt. In diesem Fall kann ein neues Modul auf der rechten Seite benachbart zur dargestellten Position des Schiebers 133 eingesetzt werden und eine generative Fertigung in diesem neuen Modul begonnen werden. Das entnommene Modul kann in einem weiteren Fertigungsabschnitt weiterverarbeitet werden, insbesondere kann hieraus das nicht ausgehärtete Pulvermaterial entnommen werden und die darin gefertigten Produkte von dem Substratplattensegment entfernt werden. Der besondere Vorteil liegt hierbei darin, dass in dem fertig gestellten Substratplattensegment, welches zuvor einer simultanen Fertigung mit den anderen Substratplattensegmenten unterzogen war, nun eine Entfernung des nicht ausgehärteten Pulvers und der fertig gestellten Produkte möglich ist, ohne dass hierzu das Pulver aus anderen Substratplattensegmenten entfernt werden muss oder der Fertigungsprozess in den anderen Substratplattensegmenten angehalten werden muss.

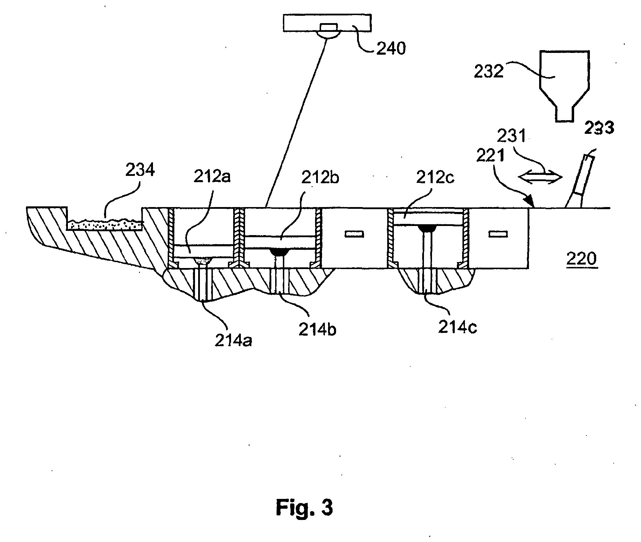

Fig. 3 zeigt eine weitere Ausführungsform der Erfindung. In einer insoweit mit den Ausführungsformen der Figuren 1A, B und 2 übereinstimmenden Weise sind mehrere Substratplattensegmente 212a-c nebeneinander angeordnet und jeweils von Seitenwänden in zu den Randbereichen jedes Substratplattensegments abgedichteter Weise umgeben. Die Seitenwände schließen mit ihren oberen Kanten bündig zu einer Oberfläche 221 ab, entlang derer sich ein Schieber 233 einer Pulverauftragsvorrichtung mit seiner unteren, als Rakelkante dienenden Kante in einer Richtung 231 entlangbewegt. Der Schieber 233 trägt hierbei eine Pulverschicht oberhalb der Substratplattensegmente 212a-c in einem Arbeitshub auf und schiebt überschüssiges Pulver in eine Auffangwanne 234.

Ebenso ist eine Laserstrahlquelle 240 vorgesehen, welche dazu dient, um vorbestimmte Bereiche der aufgetragenen Pulverschicht oberhalb jedes Substratplattensegments selektiv auszuhärten. Eine Steuerung für die Fertigungsvorrichtung ist vorgesehen, welche solcherart ausgebildet ist, dass nach jedem Schichtauftragsvorgang vorbestimmte Bereiche oberhalb jedes Substratplattensegments mittels der Laserstrahlquelle 240 ausgehärtet werden, wie zuvor beschrieben.

Im Unterschied zu den in den Figuren 1A, B und 2 gezeigten Ausführungsformen ist bei der Ausführungsform gemäß Fig. 3 ein jeweiliger Aktuator 214a-c, welcher dazu dient, um die Substratplattensegmente 212a-c individuell höhenzuverstellen und hierdurch den Abstand der oberen Oberfläche des jeweiligen Substratplattensegments von der Ebene, in welcher sich die Rakelkante des Schiebers 133 bewegt, individuell zu verändern, nicht Bestandteil eines Moduls, welches in eine Aufnahmevorrichtung eingesetzt wird. Stattdessen sind diese Aktuatoren 214a-c in die Aufnahmevorrichtung 220 integriert und die Substratplattensegmente 212a-c können mit den Aktuatoren 214a-c lösbar gekoppelt werden.

Mit der in Fig. 3 dargestellten Ausführungsform kann somit in gleicher Weise eine quasi kontinuierliche Fertigung von Produkten mittels eines generativen Herstellungsverfahrens wie SLS (Selective Laser Sintering) oder SLM (Selective Laser Melting) erfolgen, wobei in mehreren Substratplattensegmenten simultan Produkte hergestellt werden, die in einem unterschiedlichen Fertigungsstadium für jedes Substratplattensegment sind. Dies wird erreicht, indem die Substratplattensegmente individuell höhenverstellt werden können und hierdurch erreicht wird, dass oberhalb jedes Substratplattensegments ein Pulverbett aufgetragen wird, dessen Höhe unterschiedlich zwischen benachbarten Substratplattensegmenten ist, obwohl die jeweiligen neuen Schichten des aushärtbaren Materials mittels eines einzigen Schiebers 133 in einem einzigen Arbeitsgang auf die mehreren Substratplattensegmente 212a-c aufgetragen wird.

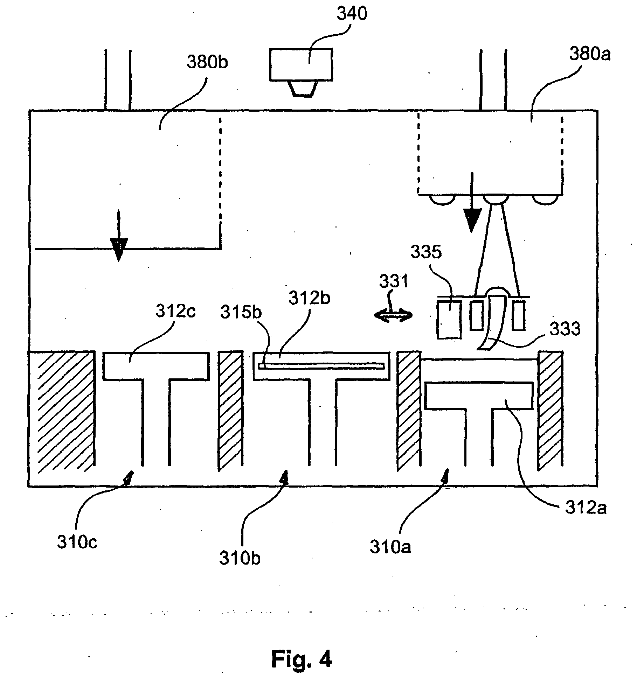

Fig. 4 zeigt eine vierte Ausführungsform der Erfindung, welche sich durch bestimmte Merkmale auszeichnet. Die in Fig. 4 gezeigte Ausführungsform beruht auf dem grundsätzlich ähnlichen Prinzip wie die in den Figuren 1A - 3 gezeigten Ausführungsformen und weist ein Substratplattensegmente 312a auf, das benachbart zu anderen Substratplattensegmenten (nicht dargestellt) angeordnet sein kann und individuell in seiner Höhe verstellt werden kann. Es ist zu verstehen, dass das zur Fig. 4 nachfolgend erläuterte Prinzip auf die in den Figuren 1A - 3 erläuterten Ausführungsformen angewendet werden kann.

Fig. 4 zeigt ein erstes Dosiermodul 310a, welches als Dosierplattform dient und vor Beginn eines Fertigungsprozesses mit Pulver gefüllt wird. Zu diesem Zweck ist eine höhenverstellbare Grundplatte 312a innerhalb des Dosiermoduls in die unterste Position verfahren. Oberhalb des Dosiermoduls 310a ist ein Strahlerfeld 380 angeordnet, welches das in das Dosiermodul 310a eingefüllte Pulver vorheizt.

Ein Rakel 333 ist entlang einer Richtung 331 horizontal verschiebbar. In Bewegungsrichtung vor dem Rakel 333 ist ein Heizband 335 angeordnet, welches das durch das Rakel bewegte Pulver laufend heizt bzw. auf der vorgeheizten Temperatur hält.

Benachbart zu dem Dosiermodul 310a ist das Substratplattensegment 312b in einem Baumodul 310b angeordnet. Das Substratplattensegment 312b ist individuell und unabhängig von der Grundplatte 312a in dem Baumodul 310a vertikal verschieblich.

Das Baumodul 310b liegt in Bezug auf die Bewegungsrichtung 331 des Rakels 333 zwischen dem Dosiermodul 310a und einem Auffangmodul 310c, der dazu dient, überschüssiges Pulver, welches durch das Rakel 333 über das Baumodul 310b hinweggeschoben wurde, aufzunehmen. Auch in dem Auffangmodul 310c ist eine Grundplatte 312c angeordnet, die individuell und unabhängig von der Grundplatte 312a und dem Substratplattensegment 312b vertikal verschoben werden kann.

Grundsätzlich ist zu verstehen, dass die in Fig. 4 gezeigte Ausführungsform anstelle des dargestellten einzelnen Baumoduls 310b mit Substratplattensegment 312b auch mehrere solche Baumodule Substratplattensegmente aufweisen kann. Diese mehreren Baumodule wären nebeneinander in Auftragsrichtung 313 angeordnet und die Mehrzahl der Substratplattensegmente wäre insgesamt zwischen einem in Bezug auf den Verschiebeweg 331 des Rakels 333 an einem Ende angeordneten Dosiermodul 310a und einem am anderen Ende angeordneten Auffangmodul 310c platziert.

Auch oberhalb des Auffangmoduls 310c ist ein Strahlerfeld 380c angeordnet, welches dazu dient, um das in dem Auffangmodul aufgefangene überschüssige Material auf einer gewünschten Temperatur zu halten.

In das Substratplattensegment 312b ist eine Heizung 315b eingebaut, welche das Substratplattensegment und das darauf angeordnete Pulverbett auf einer gewünschten Temperatur hält.

Die in Fig. 4 dargestellte Ausführungsform ist insgesamt dahingehend optimiert, dass ein gewünschter, vorgewärmter Pulverzustand des Pulvers vor dem selektiven Aushärtungsvorgang erreicht wird, indem die Strahlerfelder 380a, b, das Heizband 335 und die Heizung 315b bereitgestellt sind.

Der mit der in Fig. 4 dargestellten Ausführungsform erzielbare Fertigungsprozess besteht in einer Sequenz, in der zunächst das Substratplattensegment 312b um einen bestimmten Betrag, welcher der aufzutragenden Schichtdicke entspricht, abgesenkt wird und die Plattform 312a des Dosiermoduls 315a um einen bestimmten Betrag angehoben wird, welcher sich aus dem Querschnitt der Plattform und dem für den nachfolgenden Auftragsvorgang erforderlichen Pulvervolumen berechnet.

Hierauf folgend wird das vorgewärmte Pulvervolumen aus dem Bereich des Dosiermoduls durch horizontale Bewegung des Rakels 333 über das Substratplattensegment 312b geschoben und hierbei eine Schicht auf das Substratplattensegment 312b oder gegebenenfalls weitere Substratplattensegmente aufgetragen. Überschüssiges Pulver wird in das Auffangmodul eingebracht.

Nach Auftrag dieser Pulverschicht wird mittels eines Lasers 340 die Pulverschicht in vorbestimmten Bereichen selektiv ausgehärtet und die dabei ausgehärteten Bereiche mit zuvor ausgehärteten Bereichen in der darunter liegenden Schicht verbunden.

Das Rakel 333 fährt hierauf folgend zurück, wobei mittels einer Schleifeinrichtung, die in der nun erfolgenden Bewegungsrichtung von links nach rechts vor dem Rakel angeordnet ist, die zuvor ausgehärteten Bereiche oberflächlich angeschliffen werden, um hierdurch die Geometrietreue des generativ hergestellten Produkts zu verbessern und die Anbindung der darauf folgenden auszuhärtenden Bereiche zu erhöhen. Alternativ zu dieser Ausgestaltung, bei welcher der Schleifvorgang in einem Rückhubvorgang der Beschichtungsvorrichtung ausgeführt wird, ist es möglich, den Schleifvorgang gemeinsam mit dem Fertigungsschritt des erneuten Pulverauftrags auszuführen, In diesem Fall ist die Anordnung der Schleifeinrichtung an der Beschichtungsvorrichtung konstruktiv so zu wählen, dass die Schleifeinrichtung in Bewegungsrichtung des Pulverauftrags vor der Position liegt, an der das Pulver aufgetragen wird.

Nachdem das Rakel 333 in seine in Fig. 4 dargestellte rechte Position zurückgekehrt ist, beginnt der Prozess erneut und wird so lange wiederholt, bis das oberhalb des Substratplattensegments 312b oder eines gegebenenfalls anderen in einer Reihe von Substratplattensegmenten angeordnetem Substratplattensegment zu erstellende Produkt fertig gestellt ist. Dabei wird der Laserstrahl der Laserstrahlquelle 340 über jede Schicht solcherart selektiv geführt, dass zuvor berechnete Bereiche dieser Schicht, welche dem Querschnitt der herzustellenden Produkte in der jeweiligen Schicht auf allen Substratplattensegmenten entsprechen, selektiv ausgehärtet werden.

Nach Abschluss des Fertigungsvorgangs kann das Produkt von dem Substratplattensegment abgetrennt werden. Dabei ist grundsätzlich zu verstehen, dass auch mehrere Produkte oberhalb von einem Substratplattensegment hergestellt werden können und dass auch mehrere Substratplattensegmente nebeneinander in unterschiedlichen Fertigungsstadien mit dem einzigen Rakel 333 beschichtet und dem einzigen Laser 340 selektiv ausgehärtet werden können.

Das in dem Auffangmodul 310c aufgefangene Pulver kann durch Hochfahren der Plattform 312c angehoben werden und durch entsprechendes Verfahren des Rakels 333 von links nach rechts in den Dosiereinschub zurückbefördert werden, um einen neuen Fertigungsprozess zu starten und das Pulver hierbei wieder zu verwenden. Alternativ kann auch nun im nachfolgenden Fertigungsvorgang die Funktion von Dosiermodul und Auffangmodul vertauscht werden, so dass der Schichtauftragsvorgang nun durch eine Bewegung des Rakels von links nach rechts stattfindet und der Schleifvorgang durch eine entsprechend umgekehrte Bewegung von rechts nach links. In diesem Fall ist die aus Heizband, Rakel und Schleifvorrichtung bestehende verfahrbare Einheit entsprechend vorzugsweise um 180° um eine vertikale Achse verstellbar auszubilden.

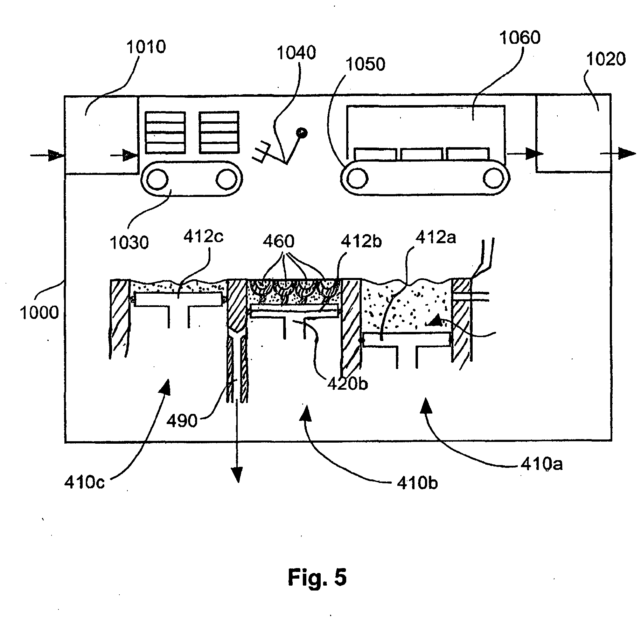

Fig. 5 zeigt eine weitere Ausführungsform der Erfindung. Die in Fig. 5 gezeigte Fertigungsanordnung umfasst eine Prozesskammer 1000, welche eine erste Schleuse 1010 und eine zweite Schleuse 1020 aufweist.

Durch die erste Schleuse 1010 werden Substratplattensegmente zugeführt und auf ein Förderband 1030 aufgelegt. Die Substratplattensegmente werden auf diesem Förderband zwischengelagert und können gegebenenfalls vorgeheizt werden.

Mittels eines Roboterarms 1040 können die Substatplattensegmente auf eine Bauplattform 420b eines Baueinschubs 410b aufgelegt werden, um darauf generativ Produkte herzustellen. Der Baueinschub 410b ist, wie zuvor bezüglich der Ausführungsform gemäß Fig. 4 bezüglich der dortigen gezeigten drei Module 312a-c erläutert, von einem Dosiereinschub 410a und einem Auffangeinschub 410c flankiert und es ist zu verstehen, dass auch mehrere Substratplattensegmente nebeneinander zwischen dem Dosiereinschub und dem Auffangeinschub angeordnet sein können, um eine quasi kontinuierliche Fertigung in der zuvor erläuterten Weise durchzuführen.

Nach Fertigstellung der generativ hergestellten Produkte in dem Baueinschub kann bei der in Fig. 5 dargestellten Ausführungsform das Substratplattensegment 412b in eine untere Position verfahren werden. In dieser unteren Position steht der Bauraum oberhalb des Substratplattensegments 412b mit einem Pulverabsaugkanal 490 in Verbindung, der in die Wandung eingelassen ist, welche den Bauraum als Seitenwand begrenzt. Über diesen Pulverabsaugkanal 490 kann dann das nicht ausgehärtete Pulver aus dem Bereich oberhalb des Substratplattensegments 412b abgesaugt werden.

Der Pulverabsaugkanal 490 ist zugleich solcherart ausgeführt, dass auch das in den Auffangeinschub geschobene Pulver durch den Absaugkanal 490 abgesaugt werden kann, wobei zu verstehen ist, dass dies als optional weitere Funktion vorgesehen sein kann oder auch nicht. Diesbezüglich wird insbesondere auf die unterschiedlichen Betriebsweisen der Ausführungsform mit Dosiermodul und Auffangmodul Bezug genommen, die zur Ausführungsform gemäß Fig. 4 erläutert wurden.

Nachdem das nicht ausgehärtete Pulver aus dem Bereich oberhalb des Substratplattensegments 412b abgesaugt wurde, kann die Bauplattform in die oberste Position vertikal verfahren werden und das Substratplattensegment 412b wiederum mittels des Roboterarms 1040 gefasst werden und einem zweiten Förderband 1050 zugeführt werden.

Mit dem zweiten Förderband 1050 wird das Substratplattensegment 412b mitsamt der darauf angeordneten Produkte durch einen Temperofen 1060 gefördert, um die darauf befindlichen Produkte einer Temperung zu unterziehen und hierdurch die gewünschten Bauteileigenschaften herzustellen. Nach erfolgter Temperung kann das Substratplattensegment 412b durch die Schleuse 1020 aus der Prozesskammer 1000 ausgeschleust werden.

Durch den Aufbau gemäß Fig. 5 wird es möglich, sowohl die Vorwärmung und Bereitstellung der Platten, als auch die gesamte generative Fertigung und Pulverhandhabung sowie das nachfolgende Tempern in einer kontrollierten Atmosphäre, insbesondere einer Inertgas- oder Aktivgasatmosphäre innerhalb einer Prozesskammer 1000 auszuführen.

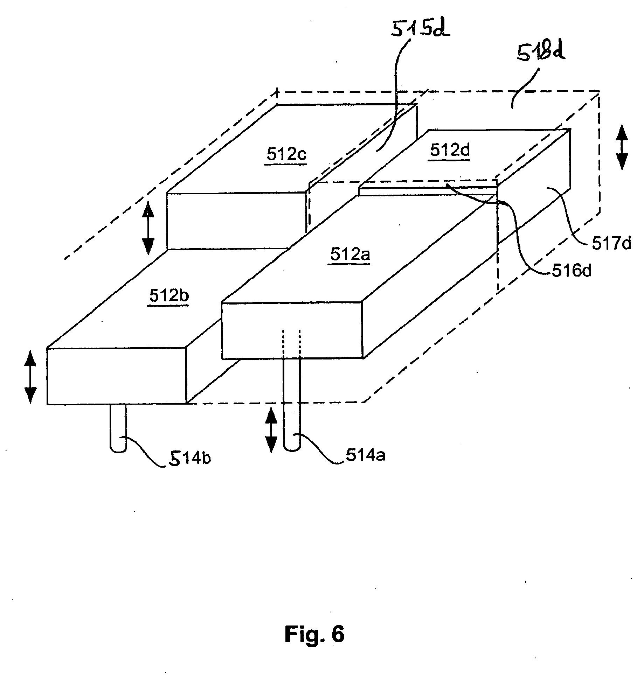

Fig. 6 zeigt einen weiteren Aspekt der erfindungsgemäßen Vorrichtung bzw. des erfindungsgemäßen Verfahrens. Dargestellt sind in Fig. 6 vier in zwei Reihen und zwei Spalten angeordnete Substratplattensegmente 512a-d. Wie zu erkennen ist, ist jedes der Substratplattensegmente individuell höhenverstellbar mittels jeweils einer entsprechenden Hebe/Senkvorrichtung 514a-d. Sowohl die Substratplattensegmente einer Zeile als auch die Substratplattensegmente einer Spalte sind unabhängig voneinander vertikal verschiebbar, so dass auf jedem der Substratplattensegmente Produkte generativ in unterschiedlichen Fertigungsstadien hergestellt werden können.

Zwischen den jeweiligen Substratplattensegmenten sind zwecks des individuellen Aufbaus eines Pulverbetts oberhalb des jeweiligen Substratplattensegments Trennwände vorzusehen. Hierbei ist in der gezeigten Ausführungsform vorgesehen, dass diese Trennwände nicht Bestandteil der Vorrichtung sind, sondern dass die Trennwände durch selektives Aushärten des Pulvermaterials im Randbereich der jeweiligen Substratplattensegmente kontinuierlich aufgebaut werden und folglich mit dem generativ hergestellten Produkt im Mittelbereich des Substratplattensegments vertikel mitwachsen. Alternativ hierzu kann vorgesehen sein, dass Trennwände als Bestandteil der Fertigungsvorrichtung bereitgestellt sind und solcherart angeordnet sind, dass ihre Oberkante bündig mit einer Ebene, in welcher sich ein Pulverauftragsrakel bewegt, abschließen.

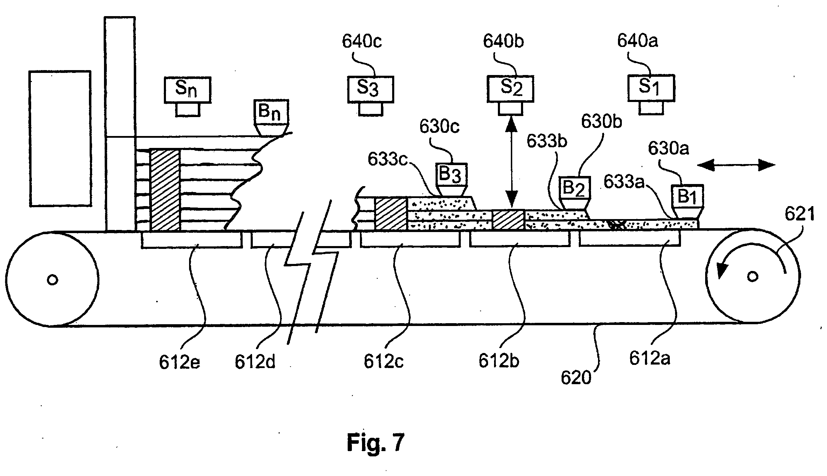

Fig. 7 zeigt eine siebte Ausführungsform der Erfindung. Die Ausführungsform weist ein Endlosförderband 620 auf, entlang dem mehrere Substratplattensegmente 612a-e in Förderrichtung 621 angeordnet sind.

Die Substratplattensegmente 612a-e sind solcherart platziert, dass ihre obere Oberfläche in einer gemeinsamen Ebene liegt.

Oberhalb der Substratplattensegmente 612a-e sind mehrere Beschichtungsvorrichtungen 630a-d angeordnet. Die Einzel-Beschichtungsvorrichtungen 630a-d umfassen jeweils eine Rakel 633a-d. Die Unterkante des Rakels 633a ist in dem Abstand einer Schicht von der Oberfläche der Substratplattensegmente 612a-e angeordnet. Die untere Kante des Rakels 633b ist gegenüber dem vorhergehenden Rakel 633a um einen Schichtabstand mehr von der Oberfläche der Substratplattensegmente 612a-e beabstandet und in gleicher Weise sind die Unterkanten der Rakel 633c, d entsprechend um jeweils eine Schichtdicke mehr von der Oberfläche der Substratplattensegmente gegenüber dem vorhergehenden, benachbarten Rakel angehoben.

Grundsätzlich ist die in Fig. 7 dargestellte Ausführungsform so zu verstehen, dass eine Vielzahl von nebeneinander angeordneten Einzel-Beschichtungsvorrichtungen a, b, c, d ... in einer solch vertikal gestaffelten Höhenanordnung bereitgestellt ist.

Zwischen jeweils zwei Schichtauftragsvorrichtungen 633a, b, c ... ist ein Bereich, in dem die aufgetragene Schicht mittels eines Lasers 640a, b, c, d selektiv ausgehärtet werden kann. Dabei ist jeder Einzel-Beschichtungsvorrichtung ein entsprechender Laser zugeordnet.

Das Förderband 620 wird während der Fertigung kontinuierlich oder diskontinuierlich solcherart fortbewegt, dass sich der Obertrum in der in Fig. 7 dargestellten Konstellation von rechts nach links bewegt. Hierdurch wird oberhalb der Substratplattensegmente 612a, b, c ... ein Materialbett durch aufeinander folgende Schichten aufgetragen, welches umso höher wird, je weiter ein Substratplattensegment von rechts nach links mittels des Förderbandes gefördert ist. In entsprechend gleicher Weise erhöht sich die Bauhöhe der auf den jeweiligen Substratplattensegmenten generativ hergestellten Produkte.

Das Prinzip der in Fig. 7 dargestellten Ausführungsform ist einerseits so zu verstehen, dass durch eine Vielzahl von Pulverauftragsvorrichtungen und die Summe der mit diesen Pulverauftragsvorrichtungen in einem Bewegungsgang des Förderbandes aufgetragenen Schichten die gewünschte Höhe des Pulverbetts und somit der hergestellten Produkte erreicht werden kann. Alternativ hierzu kann auch das Förderband 620 reziprok während eines Herstellungsprozesses mehrfach hin- und herbewegt werden und hierbei die mehreren Pulverauftragsvorrichtungen oder das Förderband vertikal verschoben werden, um mittels einer Anzahl von N Pulverauftragsvorrichtungen während eines Fertigungsprozesses eine Anzahl von M x N Pulverschichten aufzutragen, wobei M der Anzahl der reziproken Bewegungen des Förderbandes entspricht. Hierbei ist zu verstehen, dass die N Pulverauftragsvorrichtungen nach jeder reziproken Bewegung des Förderbandes um einen Betrag angehoben oder das Förderband um einen solchen Betrag abgesenkt wird, der der N-fachen Schichtstärke entspricht, um hierbei zu erreichen, dass die am weitesten rechts und folglich am tiefsten liegende Pulverauftragsvorrichtung im darauf folgenden Auftragsvorgang ihre Schicht auf die zuvor von der am weitesten links und folglich am höchsten angeordneten Pulverauftragsvorrichtung aufgetragenen Schicht aufträgt.

Nach entsprechender Fertigstellung der Produkte erfolgt in Förderrichtung nach links des Förderbandes 520 eine Absaugung des nicht ausgehärteten Pulvermaterials 590 aus dem Bereich oberhalb eines Substratplattensegments, auf dem fertig gestellte Produkte aufgebaut liegen. Dabei ist zu verstehen, dass jeweils nur oberhalb des am weitesten links liegenden Substratplattensegments eine solche Pulverabsaugung erfolgt, wohingegen das rechts hiervon liegende Substratplattensegment aufgrund der in der Regel dort noch nicht fertig gestellten Produkte noch nicht abgesaugt wird. Dies kann durch entsprechend parallel aufgebaute Trennwände zwischen den Substratplattensegmenten erreicht werden.

Nach Absaugung des nicht ausgehärteten Pulvers können die auf dem Substratplattensegment hergestellten Produkte von diesem abgetrennt werden. Gegebenenfalls kann nach diesem Abtrennvorgang mittels einer links von der Absaugung angeordneten Vorrichtung zur Oberflächenglättung, insbesondere einer Fräs- oder Schleifstation oder einer Vorrichtung zur Laserglättung die Oberflächen des Substratplattensegmentes, wieder plan zubereitet werden, um hierauf folgend das Substratplattensegment einer erneuten generativen Fertigung zuzuführen.

Es ist zu verstehen, dass die mehreren Strahlungsquellen durch jeweils einzelne Laserquellen bereitgestellt werden können oder durch einen oder mehrere Laserquellen, deren Strahl geteilt und folglich auf entsprechend mehrere Stellen gerichtet werden kann. Hierbei ist weiter zu verstehen, dass der aufgeteilte Strahl und die hieraus erzeugten mehreren Strahlengänge auch durch entsprechende Strahlungsleitmittel individuell über die jeweiligen Schichten geführt werden können, um jede Schicht individuell selektiv auszuhärten. Erfindungsgemäß findet der Schichtauftragsvorgang für alle Substratplattensegmente in einem gemeinsamen ersten Arbeitsgang, gefolgt von einem selektiven Aushärtungsvorgang in einem zweiten Arbeitsgang statt. Dies kann bei entsprechender Anzahl von Einzel-Beschichtungsvorrichtungen unter kontinuierlicher Bewegung des Förderbandes oder - bei reziproker Bewegung des Förderbandes - in einem quasi-kontinuierlichen Prozess stattfinden.

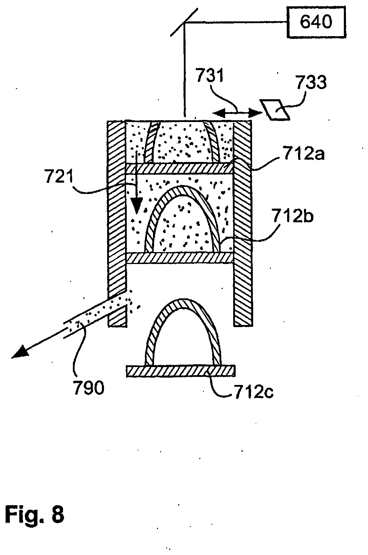

Fig. 8 ist eine weitere Ausführungsform der Erfindung zu entnehmen. Bei dieser Ausführungsform sind mehrere Substratplattensegmente 712a, b übereinander angeordnet und durch gemeinsame Seitenwände 715 - 718 wird der Bauraum oberhalb der jeweiligen Substratplattensegmente begrenzt. Die Substratplattensegmente 712a, b ... bewegen sich hierbei in einer vertikalen Bewegungsrichtung von oben nach unten durch den durch die Seitenwände begrenzten Bauraum. Mittels einer Schichtauftragsvorrichtung wird hierbei in den jeweils oberhalb des obersten Substratplattensegments 712b bereitgestellten Bauraum iterativ Schichten aufgetragen und mittels einer Laserstrahlquelle selektiv ausgehärtet. Dabei ist zu verstehen, dass der Schichtauftragsvorgang in gleicher Weise wie zuvor erläutert mittels eines Rakels erfolgen kann. Dieser Rakel bewegt sich bei der in Fig. 8 gezeigten Ausführungsform in einer horizontalen Ebene, also senkrecht zur Förderrichtung der Substratplattensegmente 712a, b.

Sobald oberhalb eines Substratplattensegments ein ausreichend hohes Pulverbett aufgetragen worden ist und das darin eingebettete, generativ hergestellte Produkt fertig gestellt ist, kann ein neues Substratplattensegment darauf aufgelegt werden, wobei es jeweils in entsprechender Weise an einer Fördervorrichtung für die vertikale Bewegung angekoppelt wird.

Die Substratplattensegmente mit darauf aufgebauten fertig gestellten Produkten können in einem unterhalb der Schichtauftragsvorrichtung und des Bauraums, in dem generativ hergestellt wird, angeordneten Fertigungsabschnitt entnommen werden, indem das Pulver abgesaugt und die Produkte von dem Substratplattensegment abgetrennt werden. Hierzu kann insbesondere eine Kanalabsaugung verwendet werden, wie sie bezüglich Fig. 5 erläutert wurde, um hierauf folgend die Produkte in einen Bereich zu fördern, der nicht von seitlichen Wänden begrenzt ist und hierdurch die Entnahme der Produkte oder des gesamten Substratplattensegments aus der Vertikalfördervorrichtung zu ermöglichen.

## Patentansprüche

1. Verfahren zum Herstellen von Produkten mit individueller Geometrie, insbesondere Zahnersatz oder dentalen Hilfsteilen, mit den Schritten:
- Herstellen mehrerer Produkte auf der Oberfläche einer Substratplatte mittels selektiven Aushärtens, insbesondere mittels selektiven Sinterns oder Schmelzens,
- Bei dem das Material in aufeinanderfolgenden Schichten aufgetragen wird,
- Nach jedem Schichtauftrag ein oder mehrere vorbestimmte Bereiche mittels einer energiereichen Strahlung selektiv ausgehärtet und mit einem oder mehreren Bereichen der darunterliegenden Schicht verbunden werden,
- wobei die vorbestimmten Bereiche anhand einer Querschnittsgeometrie des Produkts in der jeweiligen Schicht vorbestimmt werden,
- Bereitstellen einer Substratplatte welche in ein erstes Substratplattensegment (12, 112, 212, 312, 412, 512, 612, 712) und zumindest ein weiteres Substratplattensegment (12, 112, 212, 312, 412, 512, 612, 712) unterteilt ist,
- Herstellen eines ersten Produkts auf dem ersten Substratplattensegment (12, 112, 212, 312, 412, 512, 612, 712) durch aufeinanderfolgendes Auftragen von Materialschichten auf das erste Substratplattensegment (12, 112, 212, 312, 412, 512, 612, 712) und selektives Aushärten von vorbestimmten Bereichen jeder aufgetragenen Materialschicht nach deren Auftrag,
- Herstellen von zumindest einem weiteren Produkt auf dem zumindest einen weiteren Substratplattensegment durch aufeinanderfolgendes Auftragen von Materialschichten auf das weitere Substratplattensegment (12, 112, 212, 312, 412, 512, 612, 712) und selektives Aushärten von vorbestimmten Bereichen jeder aufgetragenen Materialschicht nach deren Auftrag,
**dadurch gekennzeichnet, dass** das erste und jedes weitere Substratplattensegment (12, 112, 212, 312, 412, 512, 612, 712) lösbar miteinander oder mit einem Grundträgern verbunden sind und während des Herstellungsvorgang mittels einer Hubvorrichtung in einer vertikalen Richtung angehoben und abgesenkt wird und die Hebe- und Senkbewegung der Substratplattensegmente (12, 112, 212, 312, 412, 512, 612, 712) unabhängig voneinander ist
und dass die Substratplattensegmente an einem Endlosförderband befestigt sind oder solcherart miteinander verbunden sind, dass sie in Gestalt einer Gliederkette ein Endlosförderband bilden.

2. Verfahren zum Herstellen von Produkten mit individueller Geometrie, insbesondere Zahnersatz oder dentalen Hilfsteilen, mit den Schritten:
- Herstellen mehrerer Produkte auf der Oberfläche einer Substratplatte mittels selektiven Aushärtens, insbesondere mittels selektiven Sinterns oder Schmelzens,
- Bei dem das Material in aufeinanderfolgenden Schichten aufgetragen wird,
- Nach jedem Schichtauftrag ein oder mehrere vorbestimmte Bereiche mittels einer energiereichen Strahlung selektiv ausgehärtet und mit einem oder mehreren Bereichen der darunterliegenden Schicht verbunden werden,
- wobei die vorbestimmten Bereiche anhand einer Querschnittsgeometrie des Produkts in der jeweiligen Schicht vorbestimmt werden,
- Bereitstellen einer Substratplatte welche in ein erstes Substratplattensegment (12, 112, 212, 312, 412, 512, 612, 712) und zumindest ein weiteres Substratplattensegment (12, 112, 212, 312, 412, 512, 612, 712) unterteilt ist,
- Herstellen eines ersten Produkts auf dem ersten Substratplattensegment (12, 112, 212, 312, 412, 512, 612, 712) durch aufeinanderfolgendes Auftragen von Materialschichten auf das erste Substratplattensegment (12, 112, 212, 312, 412, 512, 612, 712) und selektives Aushärten von vorbestimmten Bereichen jeder aufgetragenen Materialschicht nach deren Auftrag,
- Herstellen von zumindest einem weiteren Produkt auf dem zumindest einen weiteren Substratplattensegment (12, 112, 212, 312, 412, 512, 612, 712) durch aufeinanderfolgendes Auftragen von Materialschichten auf das weitere Substratplattensegment (12, 112, 212, 312, 412, 512, 612, 712) und selektives Aushärten von vorbestimmten Bereichen jeder aufgetragenen Materialschicht nach deren Auftrag
**dadurch gekennzeichnet, dass**
- in einem ersten Verfahrensschritt eine Materialschicht oberhalb von zumindest zwei, vorzugsweise mehreren Substratplattensegmenten (12, 112, 212, 312, 412, 512, 612, 712), die lösbar miteinander verbunden sind, solcherart aufgetragen wird, dass oberhalb des ersten Substratplattensegments (12, 112, 212, 312, 412, 512, 612, 712), ein erster Schichtabschnitt und oberhalb jedes weiteren Substratplattensegments (12, 112, 212, 312, 412, 512, 612, 712) ein entsprechend weiterer Schichtabschnitt aufgetragen wird,
- in einem zweiten Verfahrensschritt die Materialschicht selektiv ausgehärtet wird, und
- der maximale Abstand zwischen dem ersten Substratplattensegment (12, 112, 212, 312, 412, 512, 612, 712) und dem zur Herstellung des ersten Produkts darauf aufgetragenen Schichtabschnitts in zumindest einem, vorzugsweise mehreren, insbesondere allen Verfahrensstadien sich von dem maximalen Abstand zwischen dem weiteren Substratplattensegment (12, 112, 212, 312, 412, 512, 612, 712) und dem zur Herstellung des weiteren Produkts darauf aufgetragenen Schichtabschnitts unterscheidet,
- wobei mehrere Substratplattensegmente (12, 112, 212, 312, 412, 512, 612, 712) in einem Arbeitsgang mit einer einzigen Materialauftragsvorrichtung (33, 133, 233, 333, 633, 733) mit Material beschichtet werden.

3. Verfahren nach Anspruch 1 oder 2,
**dadurch gekennzeichnet, dass** die Substratplattensegmente (12, 112, 212, 312, 412, 512, 612, 712) so nebeneinander bereitgestellt werden, dass zwischen den Substratplattensegmenten (12, 112, 212, 312, 412, 512, 612, 712) kein Material hindurchtreten kann.

4. Verfahren nach Anspruch 2,
**dadurch gekennzeichnet, dass** die Substratplattensegmente (12, 112, 212, 312, 412, 512, 612, 712) als Segmente einer Endlosfördervorrichtung (120, 620) ausgebildet sind.

5. Verfahren nach einem der vorhergehenden Ansprüche,
**dadurch gekennzeichnet, dass** das Material in einem ersten Fertigungsabschnitt in einem quasi kontinuierlichen Verfahren auf die Substratplatte aufgetragen und selektiv vorbestimmte Bereiche einer jeweils aufgetragenen Schicht ausgehärtet werden und in einem zweiten Fertigungsabschnitt fertig ausgehärtete Produkte quasi kontinuierlich entnommen werden.

6. Verfahren nach einem der vorhergehenden Ansprüche,
**dadurch gekennzeichnet, dass** zwischen den Substratplattensegmenten (12, 112, 212, 312, 412, 512, 612, 712) eine Trennwand bereitgestellt wird, welche den oberhalb jedes Substratplattensegments bestehenden Bauraum von dem oberhalb eines benachbarten Substratplattensegments bestehenden Bauraum abtrennt und die Trennwand vorzugsweise durch Aushärten des aufgetragenen Materials während des Herstellungsvorgangs des Produkts hergestellt wird.

7. Verfahren nach einem der vorhergehenden Ansprüche,
**dadurch gekennzeichnet, dass** vor jedem Materialauftrag die ausgehärteten Bereiche der zuvor aufgetragenen Schicht oberflächlich beschliffen werden.

8. Verfahren nach einem der vorhergehenden Ansprüche,
**dadurch gekennzeichnet, dass** zur Aushärtung des ersten und des zumindest einen weiteren Produkts, insbesondere aller weiteren Produkte eine einzige Strahlungsquelle (40, 140, 240, 340, 640), insbesondere ein einziger Strahlengang einer einzigen Strahlungsquelle (40, 140, 240, 340, 640) genutzt wird.

9. Verfahren nach einem der vorhergehenden Ansprüche 2-8,
**dadurch gekennzeichnet, dass** jedes Substratplattensegment (12, 112, 212, 312, 412, 512, 612, 712) während des Herstellungsvorgang mittels einer Hubvorrichtung in einer vertikalen Richtung angehoben und abgesenkt wird und die Hebe- und Senkbewegung der Substratplattensegmente (12, 112, 212, 312, 412, 512, 612, 712) unabhängig voneinander ist.

10. Verfahren nach Anspruch 1,
**dadurch gekennzeichnet, dass** mehrere Substratplattensegmente (12, 112, 212, 312, 412, 512, 612, 712) in einem Arbeitsgang mit einer einzigen Materialauftragsvorrichtung (33, 133, 233, 333, 633, 733) mit Material beschichtet werden.

11. Vorrichtung zur Herstellung von Produkten mit individueller Geometrie, umfassend
- eine Substratplatte
- eine Materialauftragsvorrichtung (33, 133, 233, 333, 633, 733) zum Auftragen von Material oberhalb der Substratplatte,
- eine Strahlungsquelle (40, 140, 240, 340, 640) für einen hochenergetischen Strahl,
- Strahlführungsmittel zum Führen des Strahls auf vorbestimmte Bereiche einer auf die Substratplatte aufgetragenen Materialschicht,
- Die Substratplatte in mehrere Substratplattensegmente (12, 112, 212, 312, 412, 512, 612, 712) unterteilt ist,
**dadurch gekennzeichnet, dass** das erste und jedes weitere Substratplattensegment (12, 112, 212, 312, 412, 512, 612, 712) lösbar miteinander oder mit einem Grundträger verbunden sind und während des Herstellungsvorgangs mittels einer Hubvorrichtung in einer vertikalen Richtung anhebbar und absenkbar sind und die Hebe- und Senkbewegung der Substratplattensegmente (12, 112, 212, 312, 412, 512, 612, 712) unabhängig voneinander ist
und dass die Substratplattensegmente an einem Endlosförderband befestigt sind oder solcherart miteinander verbunden sind, dass sie in Gestalt einer Gliederkette ein Endlosförderband bilden.

12. Vorrichtung zur Herstellung von Produkten mit individueller Geometrie, umfassend
- eine Substratplatte
- eine Materialauftragsvorrichtung (33, 133, 233, 333, 633, 733) zum Auftragen von Material oberhalb der Substratplatte,
- eine Strahlungsquelle (40, 140, 240, 340, 640) für einen hochenergetischen Strahl,
- Strahlführungsmittel zum Führen des Strahls auf vorbestimmte Bereiche einer auf die Substratplatte aufgetragenen Materialschicht,
- Die Substratplatte in mehrere Substratplattensegmente (12, 112, 212, 312, 412, 512, 612, 712) unterteilt ist,
**dadurch gekennzeichnet, dass**
- die Substratplattensegmente (12, 112, 212, 312, 412, 512, 612, 712) die lösbar miteinander verbunden sind, und dass die Substratplattensegmente und die Materialzufuhreinrichtung mittels eines oder mehrerer Aktuatoren solcherart relativ individuell zueinander bewegbar sind, dass der Abstand zwischen der Ebene der Oberfläche eines ersten Substratplattensegments (12, 112, 212, 312, 412, 512, 612, 712) und eines zur Herstellung eines ersten Produkts darauf aufgetragenen Schichtbereichs der Materialschicht sich von dem Abstand zwischen der Ebene der Oberfläche eines weiteren Substratplattensegments (12, 112, 212, 312, 412, 512, 612, 712) und eines zur Herstellung des weiteren Produkts darauf aufgetragenen Schichtbereichs der Materialschicht unterscheidet
und dass die Materialauftragsvorrichtung (33, 133, 233, 333, 633, 733) zum simultanen Auftragen einer Materialschicht oberhalb einer Anzahl der mehreren Substratplattensegmente (12, 112, 212, 312, 412, 512, 612, 712) in einem Arbeitsgang ausgebildet ist.

13. Vorrichtung nach einem der vorhergehenden Ansprüche 11 bis 12,
**gekennzeichnet durch** eine Materialentfernungsvorrichtung (490, 790), insbesondere eine Material-Absaugeinrichtung, wobei die Materialentfernungsvorrichtung (490, 790) ausgebildet ist, um nicht ausgehärtetes Material aus einem ein gefertigtes Produkt umgebenden Bereich zu entfernen, und so angeordnet ist, dass sie das Material auf einem ersten Substratplattensegment zu entfernen kann und hierbei das Material auf einem weiteren, hierzu benachbarten Substratplattensegment (12, 112, 212, 312, 412, 512, 612, 712) belassen kann.

14. Vorrichtung nach einem der vorhergehenden Ansprüche 11-13,
**dadurch gekennzeichnet, dass** die Substratplattensegmente (12, 112, 212, 312, 412, 512, 612, 712) an einem Endlos-Förderband (120, 620) angeordnet sind, welches teilweise oder vollständig in einer Bearbeitungskammer verläuft, die gegen die Umgebung soweit abgedichtet ist, dass darin eine kontrollierte, insbesondere inerte Atmosphäre eingestellt werden kann.

15. Vorrichtung nach einem der vorhergehenden Ansprüche 11-14,
**gekennzeichnet durch** eine Steuerung zur Ansteuerung der Strahlführungsmittel des hochenergetischen Strahls, welche ausgebildet ist, um die Strahlführungsmittel so anzusteuern, dass die Trennwand während des Herstellungsvorgangs des Produkts durch Aushärten des aufgetragenen Materials hergestellt wird.

## Claims

1. Method of producing products with an individual geometry, in particular dental prostheses or auxiliary dental parts, comprising the steps:
- producing a plurality of products on the surface of a substrate plate by means of selective curing, in particular by means of selective sintering or melting,
- whereby the material is applied in successive layers,
- one or more predefined areas is or are selectively cured by means of high-energy radiation after applying each layer and bonded to one or more areas of the subjacent layer,
- and the predefined areas are predefined on the basis of a cross-sectional geometry of the product in the respective layer,
- preparing a substrate plate which is subdivided into a first substrate plate segment (12, 112, 212, 312, 412, 512, 612, 712) and at least one other substrate plate segment (12, 112, 212, 312, 412, 512, 612, 712),
- producing a first product on the first substrate plate segment (12, 112, 212, 312, 412, 512, 612, 712) by successively applying material layers to the first substrate plate segment (12, 112, 212, 312, 412, 512, 612, 712) and selectively curing predefined areas of each applied material layer after it has been applied,
- producing at least one other product on the at least one other substrate plate segment by successively applying material layers to the other substrate plate segment (12, 112, 212, 312, 412, 512, 612, 712) and selectively curing predefined areas of each applied material layer after it has been applied,
**characterised in that** the first and every other substrate plate segment (12, 112, 212, 312, 412, 512, 612, 712) are detachably connected to one another or to a base carrier and are raised and lowered in a vertical direction by means of a lifting device during the production process, and the raising and lowering movements of the substrate plate segments (12, 112, 212, 312, 412, 512, 612, 712) are independent of one another,
**characterised in that** the substrate plate segments are are connected to an endless conveyer belt or are connected to each other such that they form an endless conveyor belt in the form of a link chain.

2. Method of producing products with an individual geometry, in particular dental prostheses or auxiliary dental parts, comprising the steps:
- producing a plurality of products on the surface of a substrate plate by means of selective curing, in particular by means of selective sintering or melting,
- whereby the material is applied in successive layers,
- one or more pre-defined areas is or are selectively cured by means of high-energy radiation after applying each layer and bonded to one or more areas of the subjacent layer,
- and the predefined areas are predefined on the basis of a cross-sectional geometry of the product in the respective layer,
- providing a substrate plate which is subdivided into a first substrate plate segment (12, 112, 212, 312, 412, 512, 612, 712) and at least one other substrate plate segment (12, 112, 212, 312, 412, 512, 612, 712),
- producing a first product on the first substrate plate segment (12, 112, 212, 312, 412, 512, 612, 712) by successively applying material layers to the first substrate plate segment (12, 112, 212, 312, 412, 512, 612, 712) and selectively curing predefined areas of each applied material layer after it has been applied,
- producing at least one other product on the at least one other substrate plate segment (12, 112, 212, 312, 412, 512, 612, 712) by successively applying material layers to the other substrate plate segment (12, 112, 212, 312, 412, 512, 612, 712) and selectively curing predefined areas of each applied material layer after it has been applied,
**characterised in that**
- during a first method step, a material layer is applied above at least two, preferably several, substrate plate segments (12, 112, 212, 312, 412, 512, 612, 712) detachably connected to one another so that a first layer portion is applied above the first substrate plate segment (12, 112, 212, 312, 412, 512, 612, 712) and a corresponding other layer portion is applied above every other substrate plate segment (12, 112, 212, 312, 412, 512, 612, 712),
- during a second method step, the material layer is selectively cured, and
- the maximum distance between the first substrate plate segment (12, 112, 212, 312, 412, 512, 612, 712) and the layer portion applied thereto in order to produce a first product differs from the maximum distance between the other substrate plate segments (12, 112, 212, 312, 412, 512, 612, 712) and the layer portion applied thereto in order to produce the other product in at least one, preferably several, in particular all method stages
- wherein several substrate plate segments (12, 112, 212, 312, 412, 512, 612, 712) are coated with material by means of a single material applicator device (33, 133, 233, 333, 633, 733) in one operation.

3. Method as claimed in claim 1 or 2,
**characterised in that** the substrate plate segments (12, 112, 212, 312, 412, 512, 612, 712) are disposed adjacent to one another so that no material is able to pass between the substrate plate segments (12, 112, 212, 312, 412, 512, 612, 712).

4. Method as claimed in claim 2,
**characterised in that** the substrate plate segments (12, 112, 212, 312, 412, 512, 612, 712) are segments of an endless conveyer device (120, 620).

5. Method as claimed in one of the preceding claims,
**characterised in that** in a first production section, the material is applied to the substrate plate in a semi-continuous process and predefined areas of a respectively applied layer are selectively cured, and finished cured products are removed on a semi-continuous basis in a second production section.

6. Method as claimed in one of the preceding claims,
**characterised in that** a dividing wall is disposed between the substrate plate segments (12, 112, 212, 312, 412, 512, 612, 712), which separates the space located above each substrate plate segment from the space located above an adjacent substrate plate segment and the dividing wall is preferably produced by curing the applied material during the process of producing the products.

7. Method as claimed in one of the preceding claims,
**characterised in that**, before each material application, the surface of the cured areas of the previously applied layer is polished.

8. Method as claimed in one of the preceding claims,
**characterised in that** a single radiation source (40, 140, 240, 340, 640), in particular a single optical path of a single radiation source (40, 140, 240, 340, 640), is used to cure the first and the at least one other product, in particular all the other products.

9. Method as claimed in one of preceding claims 2-8,
**characterised in that** each substrate plate segment (12, 112, 212, 312, 412, 512, 612, 712) is raised and lowered in a vertical direction by means of a lifting device during the production process and the raising and lowering movements of the substrate plate segments (12, 112, 212, 312, 412, 512, 612, 712) are independent of one another.

10. Method as claimed in claim 1,
**characterised in that** several substrate plate segments (12, 112, 212, 312, 412, 512, 612, 712) are coated with material by means of a single material applicator device (33, 133, 233, 333, 633, 733) in one operation.

11. Device for producing products with an individual geometry, comprising
- a substrate plate,
- a material applicator device (33, 133, 233, 333, 633, 733) for applying material above the substrate plate,
- a radiation source (40, 140, 240, 340, 640) for a high-energy beam,
- beam guiding means for guiding the beam onto predefined areas of a material layer applied to the substrate plate,
- the substrate plate is subdivided into several substrate plate segments (12, 112, 212, 312, 412, 512, 612, 712),
**characterised in that** the first and every other substrate plate segment (12, 112, 212, 312, 412, 512, 612, 712) are detachably connected to one another or to a base carrier and can be raised and lowered in a vertical direction by means of a lifting device during the production process, and the raising and lowering movements of the substrate plate segments (12, 112, 212, 312, 412, 512, 612, 712) are independent of one another
and that the substrate plate segments are connected to an endless conveyer belt or are connected to each other such that they form an endless conveyor belt in the form of a link chain..

12. Device for producing products with an individual geometry, comprising
- a substrate plate,
- a material applicator device (33, 133, 233, 333, 633, 733) for applying material above the substrate plate,
- a radiation source (40, 140, 240, 340, 640) for a high-energy beam,
- beam guiding means for guiding the beam onto predefined areas of a material layer applied to the substrate plate,
- the substrate plate is subdivided into several substrate plate segments (12, 112, 212, 312, 412, 512, 612, 712),
**characterised in that**
- the substrate plate segments (12, 112, 212, 312, 412, 512, 612, 712) are detachably connected to one another, and the substrate plate segments and the material feeding unit can be moved individually relative to one another by means of one or more actuators so that the distance between the plane of the surface of a first substrate plate segment (12, 112, 212, 312, 412, 512, 612, 712) and a layer region of the material layer applied thereto in order to produce a first product differs from the distance between the plane of the surface of another substrate plate segment (12, 112, 212, 312, 412, 512, 612, 712) and a layer region of the material layer applied thereto in order to produce the other product
- and that the material applicator device (33, 133, 233, 333, 633, 733) is configured to apply a material layer simultaneously above a number of the several substrate plate segments (12, 112, 212, 312, 412, 512, 612, 712) in one operation..

13. Device as claimed in one of preceding claims 11 to 12,
**characterised by** a material removing device (490, 790), in particular a material suction unit, which material removing device (490, 790) is configured to remove non-cured material from an area surrounding a finished product and is disposed so that it is able to remove the material from a first substrate plate segment and as it does so is able to leave the material on another substrate plate segment (12, 112, 212, 312, 412, 512, 612, 712) adjacent thereto.

14. Device as claimed in one of preceding claims 11-13,
**characterised in that** the substrate plate segments (12, 112, 212, 312, 412, 512, 612, 712) are disposed on an endless conveyer belt (120, 620) which extends partially or completely through a processing chamber which is sealed off from the ambient environment to the degree that a controlled, in particular inert, atmosphere can be created therein.

15. Device as claimed in one of preceding claims 11-14,
**characterised by** a controller for activating the beam guiding means of the high-energy beam, which is configured to activate the beam guiding means in such a way that the dividing wall is produced by curing the applied material during the process of producing the product.

## Revendications

1. Procédé de fabrication de produits présentant une géométrie individuelle, en particulier, de prothèse dentaire ou de pièces auxiliaires de dentisterie, comprenant les étapes de :
- fabrication de plusieurs produits sur la surface d'une plaque substrat au moyen d'un durcissement sélectif, en particulier par frittage sélectif ou fusion sélective,
- dans lequel le matériau est appliqué en couches successives,
- après chaque application de couche, une ou plusieurs zones prédéterminées sont durcies sélectivement au moyen d'un rayonnement riche en énergie et sont liées à une ou plusieurs zones de la couche sous-jacente,
- dans lequel les zones prédéterminées sont prédéterminées sur la base d'une géométrie transversale du produit dans la couche respective,
- mise à disposition d'une plaque substrat qui est subdivisée en un premier segment de plaque substrat (12, 112, 212, 312, 412, 512, 612, 712) et au moins un autre segment de plaque substrat (12, 112, 212, 312, 412, 512, 612, 712),
- fabrication d'un premier produit sur le premier segment de plaque substrat (12, 112, 212, 312, 412, 512, 612, 712) par applications successives de couches de matériau sur le premier segment de plaque substrat (12, 112, 212, 312, 412, 512, 612, 712) et durcissement sélectif des zones prédéterminées de chaque couche de matériau appliquée après son application,
- fabrication d'au moins un autre produit sur l'au moins un autre segment de plaque substrat par applications successives de couches de matériau sur l'autre segment de plaque substrat (12, 112, 212, 312, 412, 512, 612, 712) et durcissement sélectif de zones prédéterminées de chaque couche de matériau appliquée après son application, **caractérisé en ce que** le premier et chaque autre segment de plaque substrat (12, 112, 212, 312, 412, 512, 612, 712) sont liés les uns aux autres de façon détachable ou à un support de base et, pendant le processus de fabrication, sont soulevés et abaissés dans une direction verticale au moyen d'un dispositif de levage et les mouvements de soulèvement et d'abaissement des segments de plaque substrat (12, 112, 212, 312, 412, 512, 612, 712) sont indépendants l'un de l'autre,
et que les segments de plaque substrat sont fixés à une bande de transport sans fin ou sont liés entre eux de telle manière qu'ils forment une bande de transport sans fin sous la forme d'une chaîne à maillons.

2. Procédé de fabrication de produits présentant une géométrie individuelle, en particulier, de prothèse dentaire ou de pièces auxiliaires de dentisterie, comprenant les étapes de :
- fabrication de plusieurs produits sur la surface d'une plaque substrat au moyen d'un durcissement sélectif, en particulier par frittage sélectif ou fusion sélective,
- dans lequel le matériau est appliqué en couches successives,
- après chaque application de couche, une ou plusieurs zones prédéterminées sont durcies sélectivement au moyen d'un rayonnement riche en énergie et sont liées à une ou plusieurs zones de la couche sous-jacente,
- dans lequel les zones prédéterminées sont prédéterminées sur la base d'une géométrie transversale du produit dans la couche respective,
- mise à disposition d'une plaque substrat qui est subdivisée en un premier segment de plaque substrat (12, 112, 212, 312, 412, 512, 612, 712) et au moins un autre segment de plaque substrat (12, 112, 212, 312, 412, 512, 612, 712),
- fabrication d'un premier produit sur le premier segment de plaque substrat (12, 112, 212, 312, 412, 512, 612, 712) par applications successives de couches de matériau sur le premier segment de plaque substrat (12, 112, 212, 312, 412, 512, 612, 712) et durcissement sélectif des zones prédéterminées de chaque couche de matériau appliquée après son application,
- fabrication d'au moins un autre produit sur l'au moins un autre segment de plaque substrat (12, 112, 212, 312, 412, 512, 612, 712) par applications successives de couches de matériau sur l'autre segment de plaque substrat (12, 112, 212, 312, 412, 512, 612, 712) et durcissement sélectif de zones prédéterminées de chaque couche de matériau appliquée après son application,
**caractérisé en ce que**
- dans une première étape de procédé, une couche de matériau est appliquée sur au moins deux, de préférence plusieurs segments de plaque substrat (12, 112, 212, 312, 412, 512, 612, 712) qui sont liés les uns des autres de manière détachable, de telle sorte que sur le premier segment de plaque substrat (12, 112, 212, 312, 412, 512, 612, 712), une première partie de couche et sur chaque autre segment de plaque substrat (12, 112, 212, 312, 412, 512, 612, 712), une autre partie de couche qui correspond soit appliquée,
- dans une deuxième étape de procédé, la couche de matériau est durcie sélectivement, et
- la distance maximale entre le premier segment de plaque substrat (12, 112, 212, 312, 412, 512, 612, 712) et la partie de couche appliquée sur celui-ci pour la fabrication du premier produit en au moins un, de préférence plusieurs, en particulier tous les stades de procédé se distingue de la distance maximale entre l'autre segment de plaque substrat (12, 112, 212, 312, 412, 512, 612, 712) et la partie de couche appliquée sur celui-ci pour la fabrication de l'autre produit,
- dans lequel plusieurs segments de plaque substrat (12, 112, 212, 312, 412, 512, 612, 712) sont revêtus d'un matériau dans un cycle d'opération avec un seul dispositif d'application de matériau (33, 133, 233, 333, 633, 733).

3. Procédé selon la revendication 1 ou 2,
**caractérisé en ce que** les segments de plaque substrat (12, 112, 212, 312, 412, 512, 612, 712) sont mis à disposition côté à côté de telle sorte qu'entre les segments de plaques substrat (12, 112, 212, 312, 412, 512, 612, 712), aucun matériau ne puisse passer.

4. Procédé selon la revendication 2,
**caractérisé en ce que** les segments de plaque substrat (12, 112, 212, 312, 412, 512, 612, 712) sont conçus comme des segments d'un dispositif de transport sans fin (120, 620).

5. Procédé selon l'une des revendications précédentes,
**caractérisé en ce que** le matériau dans une première étape de production est appliqué dans un procédé quasi-continu sur la plaque substrat et des zones prédéterminées sélectivement d'une couche appliquée respective sont durcies et dans une deuxième étape de production des produits durcis complètement sont retirés de façon quasi-continue.

6. Procédé selon l'une des revendications précédentes,
**caractérisé en ce que**, entre les segments de plaque substrat (12, 112, 212, 312, 412, 512, 612, 712), est mise à disposition une paroi de séparation qui sépare l'espace de montage se trouvant au dessus de chaque segment de plaque substrat de l'espace de montage se trouvant au dessus d'un segment de plaque de substrat voisin et la paroi de séparation est fabriquée de préférence par durcissement du matériau appliqué pendant le processus de fabrication du produit.

7. Procédé selon l'une des revendications précédentes,
**caractérisé en ce qu'**avant chaque application de matériau, les zones durcies de la couche appliquée auparavant sont polies superficiellement.

8. Procédé selon l'une des revendications précédentes,
**caractérisé en ce que**, pour le durcissement du premier et de l'au moins un autre produit, en particulier de tous les autres produits, une seule source de rayonnement (40, 140, 240, 340, 640), en particulier un seul cycle de rayonnement d'une seule source de rayonnement (40, 140, 240, 340, 640) est utilisé.

9. Procédé selon l'une des revendications 2-8 précédentes,
**caractérisé en ce que** chaque segment de plaque substrat (12, 112, 212, 312, 412, 512, 612, 712) est soulevé et abaissé dans une direction verticale pendant le processus de fabrication au moyen d'un dispositif de levage et les mouvements de soulèvement et d'abaissement des segments de plaque substrat (12, 112, 212, 312, 412, 512, 612, 712) sont indépendants l'un de l'autre.

10. Procédé selon la revendication 1,
**caractérisé en ce que** plusieurs segments de plaque substrat (12, 112, 212, 312, 412, 512, 612, 712) sont revêtus d'un matériau dans un cycle d'opération avec un seul dispositif d'application de matériau (33, 133, 233, 333, 633, 733).

11. Dispositif de fabrication de produits présentant une géométrie individuelle, comprenant :
- une plaque substrat
- un dispositif d'application de matériau (33, 133, 233, 333, 633, 733) pour appliquer un matériau sur la plaque de substrat,
- une source de rayonnement (40, 140, 240, 340, 640) pour un rayonnement hautement énergétique,
- un moyen de guidage de rayon pour guider le rayon sur des zones prédéterminées d'une couche de matériau appliquée sur la plaque substrat,
- la plaque substrat est subdivisée en plusieurs segments de plaque substrat (12, 112, 212, 312, 412, 512, 612, 712),
**caractérisé en ce que** le premier et chaque autre segment de plaque substrat (12, 112, 212, 312, 412, 512, 612, 712) sont liés les uns aux autres de façon détachable ou à un support de base et pendant le processus de fabrication sont soulevables et abaissables dans une direction verticale au moyen d'un dispositif de levage et les mouvements de soulèvement et d'abaissement des segments de plaque substrat (12, 112, 212, 312, 412, 512, 612, 712) sont indépendants l'un de l'autre,
et que les segments de plaque substrat sont fixés à une bande de transport sans fin ou sont liés entre eux de manière à former une bande de transport sans fin sous la forme d'une chaîne à maillons.

12. Dispositif de fabrication de produits présentant une géométrie individuelle, comprenant :
- une plaque substrat
- un dispositif d'application de matériau (33, 133, 233, 333, 633, 733) pour appliquer un matériau sur la plaque de substrat,
- une source de rayonnement (40, 140, 240, 340, 640) pour un rayonnement hautement énergétique,
- un moyen de guidage de rayon pour guider le rayon sur des zones prédéterminées d'une couche de matériau appliquée sur la plaque substrat,
- la plaque substrat est subdivisée en plusieurs segments de plaque substrat (12, 112, 212, 312, 412, 512, 612, 712),
**caractérisé en ce que**
- les segments de plaque substrat (12, 112, 212, 312, 412, 512, 612, 712) qui sont liés les uns aux autres de façon détachable, et que les segments de plaque substrat et le dispositif d'apport de matériau peuvent être déplacés individuellement les uns des autres, au moyen d'un ou plusieurs actionneurs de telle sorte que la distance entre le plan de la surface d'un premier segment de plaque substrat (12, 112, 212, 312, 412, 512, 612, 712) et d'une partie de couche de la couche de matériau appliquée sur celui-ci pour la fabrication d'un premier produit se distingue de la distance entre le plan de la surface d'un autre segment de plaque substrat (12, 112, 212, 312, 412, 512, 612, 712) et d'une partie de couche de la couche de matériau appliquée sur celui-ci pour la fabrication de l'autre produit,
et que le dispositif d'application de matériau (33, 133, 233, 333, 633, 733) pour l'application simultanée d'une couche de matériau au dessus d'un nombre de plusieurs segments de plaque substrat (12, 112, 212, 312, 412, 512, 612, 712) est formé en un cycle de travail.

13. Dispositif selon l'une des revendications précédentes 11 à 12,
**caractérisé par** un dispositif d'élimination de matériau (490, 790), en particulier un système d'aspiration de matériau, dans lequel le dispositif d'élimination de matériau (490, 790) est formé, pour éliminer un matériau non durci d'une zone environnante d'un produit fabriqué et est conçu de telle sorte qu'il puisse éliminer le matériau sur un premier segment de plaque substrat et puisse ainsi laisser le matériau sur un autre segment de plaque substrat voisin (12, 112, 212, 312, 412, 512, 612, 712).

14. Dispositif selon l'une des revendications 11-13 précédentes,
**caractérisé en ce que** les segments de plaque substrat (12, 112, 212, 312, 412, 512, 612, 712) sont disposés sur une bande de transport sans fin (120, 620) qui avance partiellement ou complètement dans une chambre de traitement qui est fermée hermétiquement de l'environnement de telle sorte qu'une atmosphère contrôlée, de préférence inerte puisse y être ajustée.

15. Dispositif selon l'une des revendications 11-14 précédentes,
**caractérisé par** une commande pour commander le moyen de guidage de rayon du rayon hautement énergétique qui est formé, pour commander le moyen de guidage de rayon de telle sorte que la paroi de séparation soit fabriquée pendant le processus de fabrication du produit par durcissement du matériau appliqué.
